(19) **Europäisches Patentamt / European Patent Office / Office européen des brevets**

(11) **EP 4 679 537 A1**

(12) **EUROPEAN PATENT APPLICATION**
published in accordance with Art. 153(4) EPC

(43) Date of publication:
**14.01.2026 Bulletin 2026/03**

(21) Application number: **24770178.2**

(22) Date of filing: **12.01.2024**

(51) International Patent Classification (IPC):
*H01M 4/62* (2006.01)   *C01B 32/159* (2017.01)
*H01B 1/24* (2006.01)   *H01G 11/36* (2013.01)
*H01M 4/139* (2010.01)

(52) Cooperative Patent Classification (CPC):
C01B 32/159; C01B 32/174; H01B 1/24;
H01G 11/36; H01M 4/13; H01M 4/139; H01M 4/62;
Y02E 60/10

(86) International application number:
**PCT/JP2024/000580**

(87) International publication number:
**WO 2024/190056 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.03.2023 JP 2023037367**

(71) Applicants:
• **artience Co., Ltd.**
**Chuo-ku**
**Tokyo 104-0031 (JP)**

• **TOYOCOLOR CO., LTD.**
**Tokyo 104-8381 (JP)**

(72) Inventors:
• **ITO Daichi**
**Tokyo 104-8381 (JP)**
• **SUDA Yasuaki**
**Tokyo 104-8381 (JP)**

(74) Representative: **SSM Sandmair**
**Patentanwälte Rechtsanwalt**
**Partnerschaft mbB**
**Joseph-Wild-Straße 20**
**81829 München (DE)**

(54) **CARBON NANOTUBE DISPERSION COMPOSITION AND USE THEREOF**

(57)    Provided are a carbon nanotube dispersion composition having high conductivity and good fluidity and storage stability and a non-aqueous electrolyte secondary battery having excellent rate characteristics and cycle characteristics by using an electrode composite material slurry and an electrode film using the composition. The carbon nanotube dispersion composition contains containing carbon nanotubes having an average outer diameter of 3 nm or less, a polymer component, and a solvent, in which the polymer component contains a polyvinylidene fluoride resin, which may have a substituent as a main component, and the carbon nanotube dispersion composition has a particle diameter $D_{90}$ at 90% volume accumulation in the particle size distribution measured by laser diffraction method of 2.0 $\mu$m or more and less than 20.0 $\mu$m, and a pH of 7.5 or higher.

FIG. 1

EP 4 679 537 A1

## Description

Technical Field

The disclosure relates to a carbon nanotube dispersion composition. More specifically, the disclosure relates to a carbon nanotube dispersion composition, a composite material slurry containing the carbon nanotube dispersion composition and an active material, an electrode film formed from the composite material slurry, and a non-aqueous electrolyte secondary battery containing the electrode film.

Related Art

With the spread of electric vehicles and the miniaturization, weight reduction, and performance improvement of portable devices, secondary batteries with high energy density, and further, increased capacity of such secondary batteries are in demand. Under such circumstances, non-aqueous electrolyte secondary batteries using non-aqueous electrolyte solutions, particularly lithium ion secondary batteries, have come to be used in many devices due to their characteristics of high energy density and high voltage.

Since the capacity of lithium ion secondary batteries largely depends on the main materials, positive electrode active materials and negative electrode active materials, various materials for use in these electrode active materials are being actively researched. However, the charge capacity when using commercially available electrode active materials has reached close to the theoretical values in all cases, and the improvement of electrode active materials is approaching its limit. Therefore, attempts are being made to reduce the amount of conductive materials and binder resins added, which do not directly contribute to charge capacity, as increasing the filling amount of electrode active material in the electrode film may simply increase the charge capacity.

As conductive materials, fine carbon materials are generally used, and in recent years, carbon nanotubes have become more commonly used. In particular, expectations are increasing for single-layer carbon nanotubes, which have the smallest outer diameter, for the purpose of reducing the amount of conductive material to the limit without deteriorating electrode resistance. However, since single-layer carbon nanotubes have very strong cohesive forces and are difficult to handle effectively, various studies are being conducted.

For example, in Patent Documents 1-3, methods are proposed for providing non-aqueous electrolyte secondary batteries with good characteristics by manufacturing electrode composite material slurries after pre-dispersing carbon nanotubes finely using various dispersants. Moreover, Patent Document 4 describes an electrode containing a carbon nanotube structure in which 2 to 5,000 single-layer carbon nanotube units are bonded to each other, and a battery containing such an electrode. Patent Documents 1-3 aim to provide non-aqueous electrolyte secondary batteries with good characteristics by defibrating carbon nanotubes and forming a developed fine conductive network in the electrode, while Patent Document 4 aims to provide non-aqueous electrolyte secondary batteries with good characteristics by dispersing single-layer carbon nanotubes as bundle structures and forming thick and long conductive networks.

Citation List

Patent Literature

Patent Document 1: Japanese Patent No. 7107413
Patent Document 2: Japanese Patent No. 7109632
Patent Document 3: Japanese Patent Application Laid-Open Publication No. 2022-063234
Patent Document 4: Japanese Patent Application Laid-Open Publication No. 2021-517352

SUMMARY OF INVENTION

Technical Problem

Patent Documents 1-3 require dispersants as essential components, and dispersion compositions with good fluidity and storage stability can be obtained even at high concentrations. Moreover, since the specific surface area generally increases as the outer diameter of carbon nanotubes becomes smaller, a conductive network can be formed efficiently, so dispersion compositions using carbon nanotubes with an average outer diameter of 3nm or less have been studied. However, according to the studies by the inventors of the disclosure, in the case of carbon nanotubes with an average outer diameter of 3nm or less, when they are defibrated by containing a sufficient amount of dispersant with high dispersing ability, the carbon nanotubes are cut and become shorter than their original length due to the defibration, which may increase contact resistance and consequently deteriorate the electrode resistance.

On the other hand, Patent Document 4 mixes single-layer carbon nanotubes and polyvinylidene fluoride resin without using dispersants with high dispersing ability, and it is estimated that the original length of the carbon nanotubes is moderately maintained. However, there are storage stability issues such as low concentration of carbon nanotubes, poor fluidity due to high viscosity, and In addition, carbon nanotubes aggregate during storage, precipitate, and cause phase separation. Moreover, dispersion compositions with low carbon nanotube concentration have problems such as lower design flexibility when formulating materials such as active materials, and higher transportation costs per non-volatile matter. Furthermore, poor fluidity makes it difficult to extract from tanks during transportation or storage, and poor storage stability may result in shorter shelf life or unstable quality.

Therefore, there is a demand for stably dispersing carbon nanotubes with small average outer diameter at high concentrations, and in particular, it is urgent to obtain a dispersion composition with excellent fluidity and storage stability by dispersing carbon nanotubes, mainly single-layer ones, at high concentrations as bundle structures.

In other words, the problem that the disclosure attempts to solve is to provide a carbon nanotube dispersion composition with high conductivity, good fluidity and storage stability, and to provide a non-aqueous electrolyte secondary battery having excellent rate characteristics and cycle characteristics by using an electrode composite material slurry and an electrode film made from the carbon nanotube dispersion composition.

Solution to Problem

When the inventors of the disclosure examined the relationship between the dispersion state of carbon nanotubes and rate characteristics, they found that maintaining the bundle structure state of carbon nanotubes with an average outer diameter of 3 nm or less, and dispersing them without shortening the fiber length, leads to reduced contact resistance and is effective in improving rate characteristics and cycle characteristics. In addition, they found that the storage stability and fluidity are dramatically improved and the precipitation of carbon nanotubes can be suppressed by having a particle diameter $D_{90}$ of 2.0 $\mu$m or more and less than 20.0 $\mu$m, and a pH of 7.5 or higher for the dispersion composition.

More specifically, with a carbon nanotube dispersion composition containing carbon nanotubes with an average outer diameter of 3 nm or less, a polymer component, and a solvent, in which the polymer component contains polyvinylidene fluoride resin which may have a substituent as a main component, and the carbon nanotube dispersion composition having a particle diameter $D_{90}$ at 90% volume accumulation of the particle size distribution measured by laser diffraction method of 2.0 $\mu$m or more and less than 20.0 $\mu$m, and a pH of 7.5 or higher, a dispersion composition with excellent storage stability and fluidity can be provided, and a good conductive network can be formed in the electrode.

In other words, the disclosure includes the following embodiments. The embodiments of the disclosure are not limited to the following.

<1> A carbon nanotube dispersion composition includes carbon nanotubes having an average outer diameter of 3 nm or less, a polymer component, and a solvent, in which the polymer component contains a polyvinylidene fluoride resin capable of having a substituent as a main component, and the carbon nanotube dispersion composition has a particle diameter $D_{90}$ at a 90% volume accumulation of a particle size distribution measured by a laser diffraction method of 2.0 $\mu$m or more and less than 20.0 $\mu$m, and a pH of 7.5 or higher.

<2> In the carbon nanotube dispersion composition according to <1>, a content of the polyvinylidene fluoride resin capable of having a substituent is 30 parts by mass or more and 270 parts by mass or less with respect to 100 parts by mass of the carbon nanotubes having an average outer diameter of 3 nm or less.

<3> The carbon nanotube dispersion composition according to <1> or <2> further includes a basic compound, in which a content rate of the basic compound is 0.01 mass% or more and 0.2 mass% or less based on a mass of the carbon nanotube dispersion composition.

<4> In the carbon nanotube dispersion composition according to any one of <1> to <3>, a total content rate of the carbon nanotubes having an average outer diameter of 3 nm or less and the polymer component is 80 mass% or more based on a total mass of non-volatile components of the carbon nanotube dispersion composition.

<5> In the carbon nanotube dispersion composition according to any one of <1> to <4>, a content rate of the polyvinylidene fluoride resin capable of having a substituent is 87 mass% or more based on a mass of the polymer component.

<6> A composite material slurry includes the carbon nanotube dispersion composition according to any one of <1> to <5>, and an active material.

<7> An electrode film is formed from the composite material slurry according to <6>.

<8> A non-aqueous electrolyte secondary battery includes a positive electrode and a negative electrode, in which at least one of the positive electrode and the negative electrode contains the electrode film according to <7>.

Effects of Invention

According to an embodiment of the disclosure, a carbon nanotube dispersion composition has high conductivity and good storage stability, and a non-aqueous electrolyte secondary battery having excellent rate characteristics and cycle characteristics can be provided by using a composite material slurry containing the carbon nanotube dispersion composition.

BRIEF DESCRIPTION OF DRAWINGS

[FIG. 1] FIG. 1 is a photograph (30,000x magnification) of a positive electrode 10 observed by a scanning electron microscopy.
[FIG. 2] FIG. 2 is a photograph (30,000x magnification) of a comparative positive electrode 6 observed by a scanning electron microscopy.

DESCRIPTION OF THE EMBODIMENTS

The following describes in detail the dispersion composition, composite material slurry, and non-aqueous electrolyte secondary battery according to an embodiment of the disclosure. The disclosure is not limited to the following embodiments, and the disclosure also contains embodiments implemented within a range that does not change the gist.
In this specification, carbon nanotube may be referred to as "CNT", carbon nanotube dispersion composition may be referred to as "dispersion composition" or "CNT dispersion composition", and polyvinylidene fluoride resin which may have a substituent may be referred to as "polyvinylidene fluoride resin" or "PVdF".

<<Carbon Nanotube Dispersion Composition>>

The carbon nanotube dispersion composition of the present embodiment contains carbon nanotubes with an average outer diameter of 3 nm or less, a polymer component, and a solvent, in which the particle diameter $D_{90}$ at 90% volume accumulation in the particle size distribution measured by laser diffraction method is 2.0 $\mu$m or more and less than 20.0 $\mu$m, and the pH is 7.5 or higher, and the polymer component contains polyvinylidene fluoride resin which may have a substituent as a main component.
The dispersion composition of the present embodiment does not contain active material. In this specification, when active material is contained, it is defined as a composite material slurry.
In other words, the dispersion composition of the embodiment of the disclosure refers to that in the state before the active material is added. In this respect, the dispersion composition is distinguishes from the composite material slurry containing the active material. In other words, the dispersion composition substantially does not contain active material. This is a concept that excludes the state where active material is intentionally added to the dispersion composition, and the active material may be equal to 1 mass% or less, 0.5 mass% or less, or 0.1 mass% or less with respect to the whole mass of the dispersion composition, or may be 0 mass%. The active material is as described later.
The dispersion composition may be suitably used for non-aqueous electrolyte secondary battery electrodes. However, not limited to applications for non-aqueous electrolyte secondary batteries, it may also be used for energy storage devices other than non-aqueous electrolyte secondary batteries, for example, electric double layer capacitor electrodes, non-aqueous electrolyte capacitor electrodes, etc., or antistatic materials for molded products such as IC trays for plastic and rubber products and electronic component materials, electronic components, transparent electrode (ITO film) alternatives, electromagnetic wave shields, etc.

<Carbon Nanotube>

In the carbon nanotube dispersion composition of the present embodiment, the average outer diameter of the carbon nanotubes is 3 nm or less, preferably 1 nm or more and 3 nm or less, and more preferably 1 nm or more and 2 nm or less. When the average outer diameter of the carbon nanotubes is in the above range, the specific surface area becomes larger, so a conductive network may be formed efficiently. For example, the average outer diameter of the carbon nanotubes may be 0.5 nm or more and 3 nm or less, 0.8 nm or more and 2.8 nm or less, 1 nm or more and 2.5 nm or less, or 1 nm or more and 2 nm or less.
The average outer diameter of the carbon nanotubes may be calculated by observing the morphology of the carbon nanotubes using a transmission electron microscope (manufactured by JEOL Ltd.), measuring the length of the short axis of 100 tubes, and calculating the average value.

In addition, the carbon nanotubes of the present embodiment preferably include single-layer carbon nanotubes, and may be a mixture of single-layer carbon nanotubes and multi-layer carbon nanotubes. It is more preferable to have single-layer carbon nanotubes alone. Single-layer carbon nanotubes are preferable because they have a smaller average outer diameter and a larger specific surface area, which allows for efficient formation of a conductive network. Single-layer carbon nanotubes may be manufactured with multi-layer carbon nanotubes mixed in during synthesis. It is preferable that single-layer carbon nanotubes are the main component in the carbon nanotubes. Single-layer carbon nanotubes have a structure in which a single layer of graphite is rolled, and multi-layer carbon nanotubes have a structure in which two or three or more layers of graphite are rolled. The main component refers to the component with the highest content rate by mass.

The BET specific surface area of the carbon nanotubes in the present embodiment is preferably 550 m$^2$/g or more and 1200 m$^2$/g or less, more preferably 600 m$^2$/g or more and 1200 m$^2$/g or less, even more preferably 700 m$^2$/g or more and 1200 m$^2$/g or less, and most preferably 800 m$^2$/g or more and 1200 m$^2$/g or less. When the BET specific surface area of the carbon nanotubes is in the above range, the carbon nanotubes may be entangled uniformly with the electrode active material, thereby efficiently forming a conductive network.

In the present embodiment, when the maximum peak intensity in the range of 1560-1600 cm$^{-1}$ in the Raman spectrum of the carbon nanotubes is denoted as G, and the maximum peak intensity in the range of 1310-1350 cm$^{-1}$ is denoted as D, the G/D ratio is preferably 5 or more and 100 or less, more preferably 10 or more and 90 or less, and even more preferably 20 or more and 80 or less. When the G/D ratio of the carbon nanotubes is in the above range, the crystallinity is high, making it easier to obtain good conductivity.

The volume resistivity of the carbon nanotubes in the present embodiment is preferably $1.0 \times 10^{-3}$ Ω·cm or more and $3.0 \times 10^{-2}$ Ω·cm or less, and more preferably $1.0 \times 10^{-3}$ Ω·cm or more and $1.0 \times 10^{-2}$ Ω·cm or less. The volume resistivity of the carbon nanotubes may be measured using a powder resistivity measuring device (Loresta-GP powder resistivity measurement system MCP-PD-51, manufactured by Mitsubishi Chemical Analytech). When the volume resistivity of the carbon nanotubes is in the above range, the electron transfer resistance between the carbon nanotubes and the active material may be reduced.

The carbon purity of the carbon nanotubes in the present embodiment is expressed as the content rate (%) of carbon atoms in the carbon nanotubes. The carbon purity is preferably 80 mass% or more, more preferably 90 mass% or more, and even more preferably 95 mass% or more with respect to 100 mass% of carbon nanotubes. When the carbon purity of the carbon nanotubes is in the above range, it is possible to prevent problems such as short circuits caused by dendrite formation due to impurities such as metal catalysts.

The metal content in the carbon nanotubes of the present embodiment is preferably less than 20 mass%, more preferably less than 10 mass%, and even more preferably less than 5 mass% with respect to 100 mass% of carbon nanotubes. The metals contained in the carbon nanotubes contain metals and metal oxides used as catalysts in the synthesis of carbon nanotubes, or metal powders mixed in due to wear of equipment, etc. Specifically, metals such as cobalt, nickel, aluminum, magnesium, silica, manganese, molybdenum, alloys of these metals, metal oxides, and composite oxides thereof may be mentioned.

The carbon nanotubes of the present embodiment may be surface-treated carbon nanotubes. In addition, the carbon nanotubes may be carbon nanotube derivatives with functional groups such as carboxyl groups. Furthermore, carbon nanotubes containing substances such as organic compounds or metal atoms may also be used.

The carbon nanotubes of the present embodiment may be pulverization-treated carbon nanotubes. Pulverization treatment refers to pulverizing carbon nanotubes without substantially using liquid substances as intermediates, using a pulverizing machine containing pulverizing media such as beads or steel balls, and is also called dry pulverizing. The pulverization is performed utilizing the pulverizing force and destructive force caused by collisions between pulverizing media. Pulverization mainly has the effect of reducing the secondary particles of carbon nanotubes and may improve the dispersibility of carbon nanotubes. Known methods such as dry attritors, ball mills, vibration mills, and bead mills may be used as dry pulverizing equipment, and the pulverizing time may be set arbitrarily depending on the equipment.

The carbon nanotubes of the present embodiment may be carbon nanotubes manufactured by any method. Carbon nanotubes may generally be manufactured by laser ablation method, arc discharge method, thermal CVD method, plasma CVD method, and combustion method, but are not limited to these methods.

<Polymer Component>

The polymer component of the present embodiment contains polyvinylidene fluoride resin, which may have substituents, as a main component. It may contain polymer components other than polyvinylidene fluoride resin for purposes such as assisting dispersion. In this specification, "polymer" means a molecule with a weight average molecular weight of 1,000 or more, and the main component refers to the component with the highest content rate by mass.

The content rate of polyvinylidene fluoride resin in the polymer component is preferably 87 mass% or more, more preferably 90 mass% or more, even more preferably 95 mass% or more, and may be 100 mass%, based on the total amount of the polymer component. By setting the content within this range, it is possible to suppress the increase in contact resistance caused by the reduction in particle diameter $D_{90}$ due to carbon nanotube cutting, thereby improving the electrode resistance and achieving superior rate characteristics.

As polymer components other than polyvinylidene fluoride resin, conventionally known surfactants or polymeric dispersants may be optionally used without particular limitation.

In the case where the dispersion composition of the present embodiment contains polymer components other than polyvinylidene fluoride resin, the content rate of polymer components other than polyvinylidene fluoride resin is preferably equal to 13 mass% or less, more preferably equal to 10 mass% or less, further preferably equal to 5 mass% or less, and most preferably not contained at all, based on the total amount of the polymer component.

[Polyvinylidene fluoride resin which may have substituents]

Examples of polyvinylidene fluoride resin contain homopolymers of polyvinylidene fluoride; copolymers of vinylidene fluoride with hexafluoropropylene, tetrafluoroethylene, etc., with copolymers being preferred. Although polyvinylidene fluoride resin does not have the dispersing ability to disperse carbon nanotubes at high concentrations, for example down to single units, as do the dispersants described in Patent Documents 1-3, by containing polyvinylidene fluoride resin and setting the pH to 7.5 or higher, it is possible to maintain the state of bundle structures of carbon nanotubes and disperse them without shortening their fiber length.

In addition, it is preferable that the polyvinylidene fluoride resin has substituents. While the substituents are not particularly limited, substituents with low desorption ability are preferred, with acidic functional groups such as carboxyl groups being more preferred. When acidic functional groups are present, they may ionize or polarize, providing a stabilizing effect on dispersion through electrostatic repulsion.

In the case where the polyvinylidene fluoride resin is a copolymer, or in the case where the polyvinylidene fluoride resin has substituents, the concerted de-HF reaction by the basic compound stops due to the presence of some heterogeneous bonds, which may suppress viscosity increase and gelation, making it preferable.

Examples of commercially available polyvinylidene fluoride resins without substituents (i.e., homopolymers) contain KF polymer series manufactured by KUREHA such as "W#7300, W#7200, W#1700, W#1300, W#1100, L#7305, L#7208, L#1710, L#1320, L#1120", and Solef series manufactured by Solvay such as "6008, 6010, 6012, 1015, 6020, 9007, 460, 41308".

Examples of commercially available polyvinylidene fluoride resins that are copolymers contain Solef series manufactured by Solvay such as "21216, 11010, 21510, 31508, 60512".

Examples of commercially available polyvinylidene fluoride resins having substituents contain KF polymer series manufactured by KUREHA such as "W#9700, W#9300, W#9100", and Solef series manufactured by Solvay such as "5130".

As described above, polyvinylidene fluoride resin is contained in the carbon nanotube dispersion composition. On the other hand, polyvinylidene fluoride resin may be further added after manufacturing the dispersion composition or when manufacturing the composite material slurry for the purpose of binding when forming the electrode film. The composite material slurry will be described in detail later.

<Solvent>

The dispersion composition of the present embodiment contains a solvent.

The solvent is not particularly limited, but it is preferably a solvent that may dissolve polyvinylidene fluoride resin. In this specification, "may dissolve polyvinylidene fluoride resin" means that when 0.5 g of polyvinylidene fluoride resin is dissolved in 100 g of solvent at 25°C, no insoluble matter may be visually confirmed, and the solution becomes transparent without turbidity.

In one embodiment, the solvent preferably contains a solvent consisting of any one type of high dielectric constant solvent, or a mixed solvent consisting of two or more types. Moreover, one or more other solvents may be mixed with the high dielectric constant solvent. In this specification, "high dielectric constant solvent" preferably has a relative dielectric constant value described in the *Solvent Handbook* (Teruzo Asahara, Niichiro Tokura, Makoto Ogawara, Ju Kumanotani, Manabu Senoo, *Solvent Handbook,* 14th Edition, Kodansha, 1996, 936p) of 25 or more and 60 or less at 20°C, and more preferably 25 or more and 50 or less. By using a solvent with a dielectric constant in the above range, polyvinylidene fluoride resin may be stably dissolved, and especially in the case of containing a basic compound, the storage stability and fluidity of the dispersion composition may be improved by the polarization of the solvent.

As high dielectric constant solvents, amide-based solvents (N-methyl-2-pyrrolidone (NMP), N-ethyl-2-pyrrolidone (NEP), N,N-dimethylformamide, N,N-dimethylacetamide, N,N-diethylacetamide, N-methylcaprolactam, etc.), heterocyclic-based solvents (cyclohexylpyrrolidone, 2-oxazolidone, 1,3-dimethyl-2-imidazolidinone, γ-butyrolactone, etc.), sulfoxide-based solvents (dimethyl sulfoxide, etc.), sulfone-based solvents (hexamethylphosphorotriamide, sulfolane, etc.), lower ketone-based solvents (acetone, methyl ethyl ketone, etc.), carbonate-based solvents (diethyl carbonate, dimethyl carbonate, ethyl methyl carbonate, fluoroethylene carbonate, propylene carbonate, ethylene carbonate), and others such as tetrahydrofuran, acetonitrile, etc. may be used. As the solvent, it is preferable to contain an amide-based organic solvent, and more preferable to contain at least one selected from the group consisting of N-methyl-2-pyrrolidone and N-ethyl-2-pyrrolidone.

In one embodiment, the solvent preferably does not substantially contain water. Polyvinylidene fluoride resin tends to have low solubility in water. Moreover, when water is contained in the solvent, hydrogen fluoride may desorb and form conjugated double bonds in the main chain, causing gelation, or the hydrogen fluoride may corrode other materials or equipment. In addition, the adsorption of polyvinylidene fluoride resin to carbon nanotubes decreases, making it difficult to stably maintain carbon nanotubes in the solvent. "Does not substantially contain" means that water is not intentionally added beyond the amount that may be contained due to moisture absorption, etc. The water content based on the whole mass of the solvent is preferably 5 mass% or less, more preferably 1 mass% or less, and even more preferably 0.5 mass% or less.

<Basic Compound>

In one embodiment, the dispersion composition preferably contains a basic compound. When the dispersion composition contains a basic compound, the strong polarization of the polyvinylidene fluoride resin interacts with the basic compound, which may further improve the fluidity and storage stability of the dispersion composition. The basic compound to be added may be at least one selected from the group consisting of inorganic bases, inorganic metal salts, organic bases, and organic base salts.

Examples of inorganic bases and inorganic metal salts contain chlorides, hydroxides, carbonates, nitrates, sulfates, phosphates, tungstates, vanadates, molybdates, niobates, borates of alkali metals or alkaline earth metals; and ammonium hydroxide, etc. Among these, alkali metal hydroxides or alkoxides, which are strong bases, are preferred because they easily interact with polyvinylidene fluoride resin.

Examples of alkali metal hydroxides contain lithium hydroxide, sodium hydroxide, potassium hydroxide, etc. Examples of alkaline earth metal hydroxides contain calcium hydroxide, magnesium hydroxide, etc. Among these, it is more preferable to use at least one selected from the group consisting of lithium hydroxide, sodium hydroxide, and potassium hydroxide. The metal in the inorganic base may be a transition metal.

Examples of alkali metal alkoxides contain lithium methoxide, lithium ethoxide, lithium-n-butoxide, lithium-t-butoxide, potassium methoxide, potassium ethoxide, potassium-n-butoxide, potassium-t-butoxide, sodium methoxide, sodium ethoxide, sodium-n-butoxide, sodium-t-butoxide, etc. The number of carbon atoms in the alkoxide may be 5 or more. In particular, sodium-t-butoxide is preferred.

Examples of alkaline earth metal alkoxides contain magnesium methoxide, magnesium ethoxide, magnesium-n-butoxide, magnesium-t-butoxide, etc. The number of carbon atoms in the alkoxide may be 5 or more.

Among these, lithium hydroxide, sodium hydroxide, potassium hydroxide, lithium carbonate, sodium carbonate, lithium-t-butoxide, potassium-t-butoxide, sodium-t-butoxide are more preferable, sodium hydroxide, sodium-t-butoxide are further preferable, and sodium hydroxide is even more preferable. The metal contained in the inorganic base and inorganic metal salt of this embodiment may be a transition metal.

Examples of organic bases contain primary, secondary, and tertiary amine compounds with 1 to 40 carbon atoms which may have substituents (alkylamine, amino alcohol, etc.), or organic hydroxides.

When containing a basic compound, the content rate of the basic compound is preferably 0.01 mass% or more based on the mass of the dispersion composition, and more preferably 0.02 mass% or more. Moreover, it is preferably 0.2 mass% or less, more preferably 0.15 mass% or less, and further preferably 0.10 mass% or less. For example, when containing a basic compound, the content rate of the basic compound may be 0.01 mass% or more and 0.2 mass% or less, 0.02 mass% or more and 0.15 mass% or less, or 0.04 mass% or more and 0.10 mass% or less based on the mass of the dispersion composition.

When the content rate of the basic compound is equal to or more than the lower limit described above, there tends to be an effect of easily obtaining storage stability. Moreover, when the content rate of the basic compound is equal to or less than the upper limit described above, it is preferable because it suppresses the cause of gelation of the polyvinylidene fluoride resin, and further, it may prevent causing corrosion of the dispersion device and/or the inside of the battery.

<Manufacturing Method of Dispersion Composition>

The following describes a method of dispersing carbon nanotubes in a solvent as an example of a manufacturing method of the dispersion composition. It is preferable to manufacture the dispersion composition by finely dispersing carbon nanotubes, polyvinylidene fluoride resin which may have substituents, and solvent using a dispersion device for dispersion treatment. The dispersion treatment may be adjusted to add materials at any timing and may be performed in multiple stages of two or more times.

Moreover, when containing a basic compound, the timing of adding the basic compound is not particularly limited, but it is preferable to add it after performing dispersion treatment on a mixture of solvent, polyvinylidene fluoride resin, and carbon nanotubes. This makes it easier to obtain a dispersion composition with excellent storage stability and fluidity.

That is, a preferred manufacturing method of a carbon nanotube dispersion composition includes a step of manufacturing a carbon nanotube dispersion containing carbon nanotubes, a polymer component, and a solvent, and then mixing a basic compound with the carbon nanotube dispersion to obtain a carbon nanotube dispersion composition having a particle diameter $D_{90}$ at 90% volume accumulation of a particle size distribution measured by a laser diffraction method of 2.0 $\mu$m or more and less than 20.0 $\mu$m, and a pH of 7.5 or higher.

Examples of the dispersion device contain kneader, two-roll mill, three-roll mill, planetary mixer, ball mill, horizontal sand mill, vertical sand mill, annular bead mill, attritor, high shear mixer, high pressure homogenizer, ultrasonic homogenizer, etc. Among these, it is preferable to use a high shear mixer, high pressure homogenizer, ultrasonic homogenizer, or a combination of these to finely disperse CNT in the dispersion composition and obtain suitable dispersibility. In particular, from the viewpoint of promoting the wetting of CNT and breaking down coarse particles, it is preferable to use a high shear mixer in the initial step of dispersion, followed by a high pressure homogenizer from the viewpoint of dispersing while maintaining the aspect ratio of CNT. The pressure when using a high pressure homogenizer is preferably 50 to 150 MPa, and more preferably 70 to 150 MPa.

There are various dispersion methods using dispersion devices, such as batch dispersion, pass dispersion, circulation dispersion, etc., and any method may be used, and two or more methods may be combined. Batch dispersion is a method of performing dispersion using only the dispersion device body without using piping, etc. It is preferable for small-scale production because of its simple handling. Pass dispersion is a dispersion method that contains a tank for supplying the dispersion liquid (a mixture containing dispersoid and dispersion medium, which is a precursor of the dispersion composition) to the dispersion device body through piping, and a tank for receiving the dispersion liquid and passing it through the dispersion device body. Circulation dispersion is a method in which the dispersion liquid that has passed through the dispersion device body is returned to the tank supplying the dispersion liquid, and dispersion is performed while circulating. In any method, dispersion progresses as the processing time increases, so it is sufficient to repeat the pass or circulation until the desired dispersion state is achieved, and the processing amount may be increased by changing the tank size or processing time. Pass dispersion is preferable in that it makes it easier to homogenize the dispersion state compared to circulation dispersion. Circulation dispersion is preferable in that the work and manufacturing equipment are simpler compared to pass dispersion. In the dispersion step, the breakdown of aggregated particles, distintegration of conductive materials, wetting, stabilization, etc. proceed sequentially or simultaneously, and since the finished dispersion state differs depending on how they proceed, it is preferable to manage the dispersion state in each dispersion step using various evaluation methods.

The dispersion composition of the present embodiment has a pH of 7.5 or higher. The pH of the dispersion composition is more preferably 7.7 or higher, and even more preferably 8.0 or more. Moreover, it is preferably 13.0 or less, more preferably 12.0 or less, and even more preferably 11.0 or less. If the pH exceeds the above preferable upper limit, problems such as corrosion of various raw materials and packaging materials in the battery, or gelation of the polyvinylidene fluoride resin may occur. In addition, if the pH falls below the above lower limit, the effect of storage stability is difficult to obtain. For example, the pH may be in the range of 7.5 or more, and may be 7.5 to 13.0, 7.7 to 12.0, 8.0 to 12.0, or 8.0 to 11.0.

The "pH" of the dispersion composition in this specification is a value measured using a general pH meter for the pH of a "pH measurement sample" prepared by diluting the dispersion composition with water. The pH measurement sample is adjusted by adding water such that when the mass of non-volatile matter in the dispersion composition is 100 parts by mass, the mass of non-volatile matter in the pH measurement sample becomes 40 parts by mass. For example, in the case of a dispersion composition with a non-volatile matter concentration of 2 mass%, it is sufficient to add water such that the non-volatile matter concentration of the dispersion composition becomes 0.8 mass%, and this may be measured by the method described in the Examples.

As a reason why storage stability is improved by adjusting the pH to a predetermined value, the following factors may be considered. For example, when a basic compound is added, proton abstraction from the polyvinylidene fluoride resin and fluoride ion desorption occur in a concerted manner (de-HF reaction), forming polyacetylene portions in some parts. By having polyacetylene portions in some parts of the polyvinylidene fluoride resin, it is thought that adsorption strength may be enhanced through $\pi$-$\pi$ interaction with the $\pi$ conjugation present on the carbon nanotube surface. In addition, since some C-F bonds remain unreacted, it is thought that the fluorine atoms with high electronegativity may generate electrostatic repulsion between negative charges, resulting in a dispersion composition that excels not only in dispersibility but also in storage stability.

The particle diameter $D_{90}$ at a volume-based 90% accumulation measured by laser diffraction method of the dispersion composition of this embodiment is preferably equal to 2.0 $\mu$m or more, more preferably equal to 2.2 $\mu$m or more, even more preferably equal to 2.4 $\mu$m or more, and particularly preferably equal to 2.5 $\mu$m or more. Moreover, it is preferably equal to 20.0 μm or less, more preferably equal to 15.0 μm or less, and particularly preferably equal to 10.0 μm or less. By setting the particle diameter $D_{90}$ of the dispersion composition within the above range, a dispersion composition may be advantageously obtained that is well dispersed while maintaining the number of carbon nanotubes contained in the bundle structure at or above a certain level, with minimal finely fractured conductive material. If the upper limit is exceeded, many carbon nanotubes exist in an aggregated state, resulting in a decrease in the number of bundle structures, and if below the lower limit, numerous finely cut conductive materials are generated, making it difficult to form an efficient conductive network. For example, the particle diameter $D_{90}$ may be equal to 2.0 μm or more and equal to 20.0 μm or less, equal to 2.2 μm or more and equal to 15.0 μm or less, equal to 2.3 μm or more and equal to 15.0 μm or less, equal to 2.4 μm or more and equal to 10.0 μm or less, or equal to 2.5 μm or more and equal to 10.0 μm or less.

As a method for setting the particle diameter $D_{90}$ within the above range, a method may be mentioned in which a polyvinylidene fluoride resin that does not contain or contains a trace amount of a dispersant with high dispersing ability is used, and the dispersion strength and time are adjusted.

Moreover, the particle diameter $D_{90}$ may be determined using a dispersion liquid that has undergone ultrasonic operation as a pretreatment, using a general laser diffraction method measuring device. Without pretreatment, variations may occur in the measured values, making accurate evaluation difficult. More specifically, it may be measured by the method described in the Examples. In this specification, the particle diameter $D_{90}$ at 90% accumulation may be denoted as "$D_{90}$".

The viscosity of the dispersion composition of this embodiment, measured at 25°C at 12 rpm using a B-type viscometer, is preferably equal to 8,000 mPa·s or more and less than 11,000 mPa·s, more preferably equal to 6,000 mPa·s or more and less than 8,000 mPa·s, and even more preferably less than 6,000 mPa·s. When the viscosity of the dispersion composition is within the above range, good handling is possible.

In the dispersion composition of this embodiment, the content rate of carbon nanotubes with an average outer diameter of 3 nm or less is preferably equal to 0.4 mass% or more, more preferably equal to 0.5 mass% or more, even more preferably equal to 0.8 mass% or more, and particularly preferably equal to 1.1 mass% or more, with respect to 100 mass% of the dispersion composition. Moreover, it is preferably equal to 3.0 mass% or less, preferably equal to 2.0 mass% or less, more preferably equal to 1.6 mass% or less, and even more preferably equal to 1.3 mass% or less. For example, the content rate of carbon nanotubes with an average outer diameter of 3 nm or less may be equal to 0.4 mass% or more and 3.0 mass% or less, equal to 0.5 mass% or more and 2.0 mass% or less, equal to 0.8 mass% or more and 1.6 mass% or less, or equal to 1.1 mass% or more and 1.3 mass% or less, with respect to 100 mass% of the dispersion composition.

In the dispersion composition of this embodiment, the content of polyvinylidene fluoride resin is preferably equal to 30 parts by mass or more, more preferably equal to 70 parts by mass or more, with respect to 100 parts by mass of carbon nanotubes with an average outer diameter of 3 nm or less. Moreover, it is preferably equal to 270 parts by mass or less, more preferably equal to 200 parts by mass or less, and even more preferably equal to 150 parts by mass or less. If the above upper limit is exceeded, the viscosity of the dispersion composition may increase due to the increase in polyvinylidene fluoride resin not adsorbed to the carbon nanotubes, which may impair handling properties. Moreover, if the content is below the above lower limit, a suitable dispersion state of carbon nanotubes may not be obtained, resulting in decreased fluidity of the dispersion composition, and storage stability may also decrease. For example, the content of polyvinylidene fluoride resin may be equal to 30 parts by mass or more and 270 parts by mass or less, equal to 50 parts by mass or more and 250 parts by mass or less, equal to 60 parts by mass or more and 200 parts by mass or less, or equal to 70 parts by mass or more and 150 parts by mass or less, with respect to 100 parts by mass of carbon nanotubes with an average outer diameter of 3 nm or less.

Furthermore, by having an appropriate amount of polymer component, it is possible to suppress the increase in contact resistance due to the reduction in particle diameter $D_{90}$ caused by the cutting of carbon nanotubes, and the resistance of the electrode may be improved, thereby making it possible to achieve more excellent rate characteristics.

In the dispersion composition of this embodiment, the total mass of carbon nanotubes with an average outer diameter of 3 nm or less and polyvinylidene fluoride resin which may have substituents may be equal to 100 mass% or less with respect to the total mass of non-volatile components in the dispersion composition, preferably equal to 80 mass% or more, more preferably equal to 82.5 mass% or more, and even more preferably equal to 85 mass% or more. By setting the range as described above, carbon nanotubes with an average outer diameter of 3 nm or less, polyvinylidene fluoride resin which may have substituents, and basic compound may uniformly interact with each other, making it possible to obtain a dispersion composition with better dispersion. For example, in the dispersion composition of this embodiment, the total mass of carbon nanotubes with an average outer diameter of 3 nm or less and polyvinylidene fluoride resin which may have substituents may be equal to 80 mass% or more and 100 mass% or less, equal to 82.5 mass% or more and 99.5 mass% or less, or equal to 85 mass% or more and 99 mass% or less with respect to the total mass of non-volatile components in the dispersion composition.

In this specification, the total mass of non-volatile components in the dispersion composition refers to the mass of residue (solid content) after heating the dispersion composition and volatilizing the solvent.

The dispersion composition of this embodiment may be manufactured by mixing and dispersing carbon nanotubes with an average outer diameter of 3 nm or less, a polymer component containing polyvinylidene fluoride resin which may have substituents as a main component, and a solvent, either all at once or in portions. In this manufacturing method, additional components may be used, but it is preferable to use carbon nanotubes with an average outer diameter of 3 nm or less alone. Moreover, it is preferable to use polyvinylidene fluoride resin which may have substituents alone as the polymer component. The obtained carbon nanotube dispersion composition preferably has a particle diameter $D_{90}$ at 90% volume accumulation of the particle size distribution measured by laser diffraction method of equal to 2.0 $\mu$m or more and less than 20.0 $\mu$m, and a pH equal to 7.5 or higher.

<<Composite Material Slurry>>

The composite material slurry of this embodiment may be obtained by adding active material to the dispersion composition, and may be used for non-aqueous electrolyte secondary battery electrodes.

The composite material slurry may further contain polyvinylidene fluoride resin which may have substituents and/or other polymer components added to the dispersion composition for the purpose of better binding the active material and other components. In this specification, the polyvinylidene fluoride resin which may have substituents and/or other polymer components added to the dispersion composition for the purpose of better binding the active material and other components may be referred to as "binder resin." Moreover, as necessary, other optional components may be appropriately contained to the extent that they do not hinder the purpose of the disclosure for purposes such as wetting, surface activity, pH adjustment, wetting promotion, leveling, conductive assistance, etc. Optional components may be added at any timing such as before preparing the composite material slurry, during mixing, after mixing, or combinations thereof. The active material may be a positive electrode active material or a negative electrode active material. In this specification, positive electrode active material and negative electrode active material may be simply referred to as "active material". "Active material" refers to the material that forms the basis of battery reactions. Active materials are divided into positive electrode active material and negative electrode active material based on electromotive force, and positive electrode composite material slurry may be made using positive electrode active material, while negative electrode composite material slurry may be made using negative electrode active material.

The composite material slurry is preferably in a slurry state to improve uniformity and processability.

As the binder resin added for the purpose of better binding the active material or the like, there is no particular limitation as long as it is a polymer component normally used as a binder resin for batteries, and it may be appropriately selected according to the purpose. The aforementioned polyvinylidene fluoride resin which may have substituents may be used, and as other polymer components, for example, polymers or copolymers having constituent components such as ethylene, propylene, vinyl chloride, vinyl acetate, maleic acid, acrylic acid, acrylic acid esters, methacrylic acid, methacrylic acid esters, styrene, etc.; polyurethane resin, polyester resin, phenol resin, epoxy resin, phenoxy resin, urea resin, melamine resin, alkyd resin, acrylic resin, formaldehyde resin, silicon resin; elastomers such as styrene-butadiene rubber, fluorine rubber; conductive resins such as polyaniline, polyacetylene, etc. may be used. Moreover, modified products or mixtures of these resins, and copolymers may be used, and they may be used alone or in combination of two or more kinds.

The content of CNT in the composite material slurry is preferably equal to 0.01 parts by mass or more, more preferably equal to 0.03 parts by mass or more, and even more preferably equal to 0.05 parts by mass or more with respect to 100 parts by mass of the active material. Moreover, it is preferably equal to 10 parts by mass or less, more preferably equal to 5 parts by mass or less, and even more preferably equal to 3 parts by mass or less. If the above upper limit is exceeded, the filling amount of the active material in the electrode may decrease, leading to lower capacity of the battery. Moreover, if it falls below the above lower limit, the conductivity of the electrode and the battery may become insufficient.

The content of the polymer component in the composite material slurry is preferably equal to 0.01 parts by mass or more, and more preferably equal to 0.02 parts by mass or more with respect to 100 parts by mass of the active material. By setting within the above range, the adhesion of the conductive film may be further improved. Moreover, it is preferably equal to 20 parts by mass or less, and more preferably equal to 10 parts by mass or less. By keeping within the above range, the active material concentration in the conductive film may be increased to achieve higher capacity.

<Positive Electrode Active Material>

The positive electrode active material is not particularly limited, but for example, in non-aqueous electrolyte secondary battery applications, metal compounds such as metal oxides and metal sulfides capable of reversibly doping or intercalating lithium ions may be used. For example, lithium manganese composite oxide (e.g., $Li_xMn_2O_4$ or $Li_xMnO_3$), lithium nickel composite oxide (e.g., $Li_xNiO_2$), lithium cobalt composite oxide ($Li_xCoO_2$), lithium nickel cobalt composite oxide (e.g., $Li_xNi_{1-y}Co_yO_2$), lithium manganese cobalt composite oxide (e.g., $Li_xMn_yCo_{1-y}O_2$), lithium nickel manganese cobalt composite oxide (e.g., $Li_xNi_yCo_zMn_{1-y-z}O_2$), spinel-type lithium manganese nickel composite oxide (e.g., $Li_xMn_{2-y}Ni_yO_4$), etc., which are composite oxide powders of lithium and transition metals, lithium phosphate powders having olivine structure (e.g., $Li_xFePO_4$, $Li_xFe_{1-y}Mn_yPO_4$, $Li_xCoPO_4$, etc.), transition metal oxide powders such as manganese oxide, iron oxide, copper oxide, nickel oxide, vanadium oxide (e.g., $V_2O_5$, $V_6O_{13}$), titanium oxide, etc., transition metal sulfide powders such as iron sulfate ($Fe_2(SO_4)_3$), $TiS_2$, and FeS, etc. may be mentioned. However, x, y, z are numbers, and $0<x<1$, $0<y<1$, $0<z<1$, $0<y+z<1$. These positive electrode active materials may be used alone or in combination of multiple types.

<Negative Electrode Active Material>

The negative electrode active material is not particularly limited, but for example, metal Li capable of reversibly doping or intercalating lithium ions, or its alloys, tin alloys, silicon alloy negative electrodes, metal oxide-based materials such as $Li_xTiO_2$, $Li_xFe_2O_3$, $Li_xFe_3O_4$, $Li_xWO_2$, etc. conductive polymers such as polyacetylene, poly-p-phenylene, carbonaceous powder such as artificial graphite containing highly graphitized carbon materials, or natural graphite, and resin-baked carbon materials may be used. However, x is a number, and $0<x<1$. These negative electrode active materials may be used alone or in combination of multiple types. Especially in the case of using silicon alloy negative electrodes, while they have large theoretical capacity, they also have extremely large volume expansion, so it is preferable to use them in combination with highly graphitized carbon materials such as artificial graphite, or carbonaceous powders such as natural graphite, resin-baked carbon materials, etc.

<Manufacturing Method of Composite Material Slurry>

In the method of preparing the composite material slurry, in the case of adding binder resin to the dispersion composition, the order of adding the binder resin and active material is not particularly limited. For example, the following are included: the preparation method of adding binder resin to the dispersion composition, and then adding active material; the preparation method of adding active material to the dispersion composition, and then adding binder resin; or the preparation method of adding binder resin and active material to the dispersion composition all at once. Moreover, the binder resin may be dissolved in advance before addition. As a method for preparing the composite material slurry, it is preferable to add binder resin to the dispersion composition, then further add active material and perform a stirring process. The stirring apparatus used for stirring is not particularly limited. For the stirring apparatus, a disper, homogenizer, etc. may be used.

The amount of non-volatile matter in the composite material slurry is preferably 30 mass% or more, more preferably 40 mass% or more, based on the mass of the composite material slurry (taking the mass of the composite material slurry as 100 mass%). Moreover, it is preferably 90 mass% or less, more preferably 85 mass% or less.

<<Non-Aqueous Electrolyte Secondary Battery>>

The non-aqueous electrolyte secondary battery according to one embodiment of the disclosure contains a positive electrode, a negative electrode, and an electrolyte, in which at least one selected from the group consisting of the positive electrode and the negative electrode has an electrode film formed from the composite material slurry of the present embodiment. The positive electrode and the negative electrode may further contain a current collector. Moreover, in the case where one of the electrode films possessed by the positive electrode or negative electrode is an electrode film using the dispersion composition according to the present embodiment, the electrode film possessed by the other electrode is not particularly limited and may be a conventionally known electrode film.

The structure of the non-aqueous electrolyte secondary battery of one embodiment is not particularly limited, but typically contains a positive electrode, a negative electrode, an electrolyte, and a separator provided as needed, and may be formed in various shapes according to the purpose of use, such as paper type, cylindrical type, button type, laminated type, etc.

<Positive Electrode or Negative Electrode>

The positive electrode or negative electrode has an electrode film formed from the composite material slurry using the dispersion composition of the present embodiment, and a current collector. The electrode film may be formed, for example, by coating the dispersion composition on the current collector and drying it. An electrode film formed using a positive electrode composite material slurry may be used as a positive electrode. An electrode film formed using a negative electrode composite material slurry may be used as a negative electrode. In this specification, a film formed using a dispersion composition containing an active material may be referred to as an "electrode composite material layer".

The material and shape of the current collector used for forming the above electrode film are not particularly limited, and may be appropriately selected to suit various non-aqueous electrolyte secondary batteries. As the material of the current collector, conductive metals or alloys such as aluminum, copper, nickel, titanium, or stainless steel may be mentioned. As for the shape, generally a planar foil is used, but a current collector with a roughened surface, a perforated foil current collector, or a mesh current collector may also be used. The thickness of the current collector is preferably about 0.5 to 30 $\mu$m.

There is no particular limitation on the method of coating the dispersion composition on the current collector, and known methods may be used. Specifically, die coating method, dip coating method, roll coating method, doctor coating method, knife coating method, spray coating method, gravure coating method, screen printing method, or electrostatic coating method, etc. may be mentioned. As the drying method, standing drying, or drying using a forced air dryer, hot air dryer, infrared heating device, far-infrared heating device, etc. may be mentioned, but are not particularly limited thereto.

After coating, rolling processing may be performed using a flat press, calendar roll, etc. The thickness of the formed membrane is, for example, 1 $\mu$m or more and 500 $\mu$m or less, and preferably 10 $\mu$m or more and 300 $\mu$m or less.

The membrane formed using the dispersion composition may also be used as an underlayer of the electrode composite material layer to improve adhesion between the electrode composite material layer and the current collector, or to improve the conductivity of the electrode film.

<Electrolyte>

As the electrolyte, various conventionally known substances that allow ion movement may be used. For example, those containing lithium salts such as $LiBF_4$, $LiClO_4$, $LiPF_6$, $LiAsF_6$, $LiSbF_6$, $LiCF_3SO_3$, $Li(CF_3SO_2)_2N$, $LiC_4F_9SO_3$, $Li(CF_3SO_2)_3C$, $LiI$, $LiBr$, $LiCl$, $LiAlCl$, $LiHF_2$, $LiSCN$, or $LiBPh_4$ (where Ph is a phenyl group) may be mentioned, but these are not limited. It is preferable to dissolve the electrolyte in a non-aqueous solvent for use as an electrolyte solution.

As the non-aqueous solvent, there is no particular limitation, but examples contain carbonates such as ethylene carbonate, propylene carbonate, butylene carbonate, dimethyl carbonate, ethyl methyl carbonate, and diethyl carbonate; lactones such as $\gamma$-butyrolactone, $\gamma$-valerolactone, and $\gamma$-octanoic lactone; glymes such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters such as methyl formate, methyl acetate, and methyl propionate; sulfoxides such as dimethyl sulfoxide and sulfolane; and nitriles such as acetonitrile. These solvents may be used alone or in a mixture of two or more.

The non-aqueous electrolyte secondary battery preferably contains a separator. As the separator, for example, polyethylene nonwoven fabric, polypropylene nonwoven fabric, polyamide nonwoven fabric, and nonwoven fabrics subjected to hydrophilic treatment may be mentioned, but these are not particularly limited.

Examples

The disclosure will be described more specifically below with Examples. The disclosure is not limited to the following Examples as long as it does not exceed its gist. Unless otherwise specified, "parts" refers to "parts by mass" and "%" refers to "mass%". In the following Examples, carbon nanotubes are also denoted as CNT, and N-methyl-2-pyrrolidone is also denoted as NMP.

The evaluation results of the Examples and Comparative Examples were evaluated as C for the feasible range, B for the more excellent range, A for the particularly excellent range, and D for others.

In the Examples and Comparative Examples, polyvinylidene fluoride resin that may have the following substituents was used.

- W#7300: KF polymer W#7300 (polyvinylidene fluoride resin, homopolymer, manufactured by KUREHA)
- W#7200: KF polymer W#7200 (polyvinylidene fluoride resin, homopolymer, manufactured by KUREHA)
- W#1300: KF polymer W#1300 (polyvinylidene fluoride resin, homopolymer, manufactured by KUREHA)
- W#1100: KF polymer W#1100 (polyvinylidene fluoride resin, homopolymer, manufactured by KUREHA)
- W#9300: KF polymer W#9300 (polyvinylidene fluoride resin, copolymer, manufactured by KUREHA)
- W#9700: KF polymer W#9700 (polyvinylidene fluoride resin having substituents, manufactured by KUREHA)
- W#9100: KF polymer W#9100 (polyvinylidene fluoride resin having substituents, manufactured by KUREHA)
- S-6010: solef6010 (polyvinylidene fluoride resin, homopolymer, manufactured by Solvay)
- S-6020: solef6020 (polyvinylidene fluoride resin, homopolymer, manufactured by Solvay)
- S-5130: solef5130 (polyvinylidene fluoride resin having substituents, manufactured by Solvay)

In the Examples and Comparative Examples, the following carbon nanotubes were used.

- TNSR: Single-wall carbon nanotube (average outer diameter 1.5 nm, carbon purity 95%, specific surface area 610 $m^2$/g, manufactured by Timesnano)
- TNSAR: Single-wall carbon nanotube (average outer diameter 1.5 nm, carbon purity 95%, specific surface area 950 $m^2$/g, manufactured by Timesnano)

- TUBALL: Single-wall carbon nanotube (average outer diameter 1.6 nm, carbon purity 99%, specific surface area 980 m²/g, manufactured by OCSiAl)
- TUBALL: Single-wall carbon nanotube (average outer diameter 1.8 nm, carbon purity 80%, specific surface area 520 m²/g, manufactured by OCSiAl)

<Preparation of Dispersion Composition>

(Example 1-1)

A dispersion composition was prepared according to the materials and composition shown in Table 1 as follows.
First, NMP was placed in a stainless container. Next, a standard round hole type head was attached to a high shear mixer (L5M-A, manufactured by SILVERSON), and after adding polyvinylidene fluoride resin while stirring at a speed of 3,000 rpm, stirring was continued for 1 hour to dissolve the polyvinylidene fluoride resin. Subsequently, CNT was added while stirring with the high shear mixer, and batch dispersion was performed for 1 hour at a speed of 6,000 rpm. Then, the dispersion liquid was supplied from the stainless container to a high pressure homogenizer (Starburst Labo HJP-17007, manufactured by SUGINO MACHINE) through piping, and circulation dispersion treatment was performed according to the number of passes shown in Table 1. The dispersion treatment was performed using a single nozzle chamber, with a nozzle diameter of 0.25 mm, at a pressure of 100 MPa. Subsequently, the dispersion liquid was supplied from the high pressure homogenizer to the stainless container through piping, and a basic compound was added while stirring at a speed of 3,500 rpm with the high shear mixer. After stirring for 30 minutes, dispersion composition 1 was obtained.
At this time, the content rate of carbon nanotube based on dispersion composition 1 was 1.0 mass%, the polymer component was 1.0 mass% (the content rate of polyvinylidene fluoride resin based on the polymer component was 100 mass%), the content rate of basic compound was 0.04 mass%, and the solvent was 97.96 mass%. In addition, the total content rate of carbon nanotube and polymer component was 98 mass% based on the total mass of non-volatile components of dispersion composition 1.

(Examples 1-2 to 1-30)

Except for changes made according to the materials, composition, and number of passes shown in Table 1, each dispersion composition 2 to 30 was obtained in the same manner as in Example 1-1.

(Examples 1-31 to 1-37)

A dispersion composition was prepared according to the materials and composition shown in Table 1 as follows. First, NMP was placed in a stainless container. Next, a standard round hole type head was attached to a high shear mixer (L5M-A, manufactured by SILVERSON), and after adding polyvinylidene fluoride resin and other polymer components while stirring at a speed of 3,000 rpm, stirring was continued for 1 hour to dissolve the polyvinylidene fluoride resin and other polymer components. Following the same working step as the dispersion composition of Example 1-1, circulation dispersion treatment was performed using a high pressure homogenizer to obtain each dispersion composition 31 to 37.

(Comparative Examples 1-1 to 1-3)

Except for changes made according to the materials, composition, and number of passes shown in Table 1, comparison dispersion compositions 1 to 3 were obtained in the same manner as in Example 1-1.

(Comparative Example 1-4)

Except for changes made according to the materials and composition shown in Table 1, comparative dispersion composition 4 was obtained in the same manner as in Example 1-31.

(Comparative Example 1-5)

A dispersion composition was prepared according to the materials and composition shown in Table 1 as follows. First, NMP was placed in a stainless container. Next, a standard round hole type head was attached to a high shear mixer (L5M-A, manufactured by SILVERSON), and after adding polymer components and basic compound while stirring at a speed of 3,000 rpm, stirring was continued for 1 hour to dissolve the polymer components and basic compound. Subsequently, CNT was added while stirring with the high shear mixer, and batch dispersion was performed for 1 hour at a speed of 6,000 rpm. Then, the dispersion liquid was supplied from the stainless container to a high pressure homogenizer (Starburst Labo HJP-17007, manufactured by SUGINO MACHINE) through piping, and circulation dispersion treatment was performed according to the number of passes shown in Table 1. The dispersion treatment was performed using a single nozzle chamber, with a nozzle diameter of 0.25 mm, at a pressure of 100 MPa. Subsequently, the dispersion liquid was supplied from the high pressure homogenizer to the stainless container through piping, and while stirring with a disper, the entire amount of polyvinylidene fluoride resin was dissolved to obtain comparative dispersion composition 5.

The basic compounds described in Table 1 are as follows.

- NaOH: sodium hydroxide (purity >98.0%, granular, manufactured by Tokyo Chemical Industry)
- LiOH: lithium hydroxide (purity >98.0%, manufactured by Tokyo Chemical Industry)
- KOH: potassium hydroxide (purity >86.0%, manufactured by Tokyo Chemical Industry)
- $Na_2CO_3$: sodium carbonate (purity >99.0%, manufactured by Tokyo Chemical Industry)
- $C_2H_5NH_2$: 2-aminoethanol (purity >99.0%, manufactured by Tokyo Chemical Industry)

The other polymer components (dispersants) described in Table 1 are as follows.

- H-NBR1: Therban(R)3406 (hydrogenated acrylonitrile-butadiene rubber, manufactured by ARLANXEO)
- H-NBR2: Therban(R)AT 3404 (hydrogenated acrylonitrile-butadiene rubber, manufactured by ARLANXEO)
- H-NBR3: Zetpole2000L (hydrogenated acrylonitrile-butadiene rubber, manufactured by Japan Zeon)
- PVP: polyvinyl pyrrolidone K-15 (manufactured by ISP)
- PVA: Kuraray Poval 3-86SD (modified polyvinyl alcohol, manufactured by Kuraray)

[Table 1]

Table 1

| Example and Comparative Example | Dispersion composition | CNT | | Polymer Components | | | | | | Basic Compounds | | Solvent NMP | Dispersion conditions |
|---|---|---|---|---|---|---|---|---|---|---|---|---|---|
| | | | | Polyvinylidene fluoride resin | | | | Other polymer components | | | | | |
| | | Type | Solid content addition amount (part) | Type | Solid content addition amount (part) | Solid content addition amount to 100 parts by mass of CNT (part) | Content rate based on mass of polymer component (%) | Type | Solid content addition amount (part) | Type | Solid content addition amount (part) | Addition amount (part) | Pass frequency (times) |
| Example 1-1 | Dispersion composition 1 | TUBALL | 1.0 | W#7300 | 1.0 | 100 | 100 | - | - | NaOH | 0.04 | 97.96 | 15 |
| Example 1-2 | Dispersion composition 2 | 1UBAII. | 1.0 | W#7200 | 1.0 | 100 | 100 | - | - | NaOH | 0.04 | 97.96 | 15 |
| Example 1-3 | Dispersion composition 3 | TUBALL | 1.0 | W#1300 | 1.0 | 100 | 100 | - | - | NaOH | 0.04 | 97.96 | 15 |
| Example 1-4 | Dispersion composition 4 | TUBALL | 1.0 | W#1100 | 1.0 | 100 | 100 | - | - | NaOH | 0.04 | 97.96 | 15 |
| Example 1-5 | Dispersion composition 5 | TUBALL | 1.0 | W#9300 | 1.0 | 100 | 100 | - | - | NaOH | 0.04 | 97.96 | 15 |
| Example 1-6 | Dispersion composition 6 | TUBALL | 1.0 | W#9700 | 1.0 | 100 | 100 | - | - | NaOH | 0.04 | 97.96 | 15 |
| Example 1-7 | Dispersion composition 7 | 1UBAII. | 1.0 | W#9100 | 1.0 | 100 | 100 | - | - | NaOH | 0.04 | 97.96 | 15 |
| Example 1-8 | Dispersion composition 8 | TURALL | 1.0 | s-6010 | 1.0 | 100 | 100 | - | - | NaOH | 0.04 | 97.96 | 15 |
| Example 1-9 | Dispersion composition 9 | TUBALL | 1.0 | s-6020 | 1.0 | 100 | 100 | - | - | NaOH | 0.04 | 97.96 | 15 |

(continued)

| Example and Comparative Example | Dispersion composition | CNT | | Polymer Components | | | | | | Basic Compounds | | Solvent NMP | Dispersion conditions |
|---|---|---|---|---|---|---|---|---|---|---|---|---|---|
| | | | | Polyvinylidene fluoride resin | | | | Other polymer components | | | | | |
| | | Type | Solid content addition amount (part) | Type | Solid content addition amount (part) | Solid content addition amount to 100 parts by mass of CNT (part) | Content rate based on mass of polymer component (%) | Type | Solid content addition amount (part) | Type | Solid content addition amount (part) | Addition amount (part) | Pass frequency (times) |
| Example 1-10 | Dispersion composition 10 | TUBALL | 1.0 | s-5130 | 1.0 | 100 | 100 | - | - | NaOH | 0.04 | 97.96 | 15 |
| Example 1-11 | Dispersion composition 11 | TUBALL | 0.5 | W#9300 | 0.5 | 100 | 100 | - | - | NaOH | 0.02 | 98.98 | 10 |
| Example 1-12 | Dispersion composition 12 | TUBALL | 0.7 | W#9300 | 0.7 | 100 | 100 | - | - | NaOH | 0.03 | 98.57 | 12 |
| Example 1-13 | Dispersion composition 13 | TUBALL | 1.2 | W#9300 | 1.2 | 100 | 100 | - | - | NaOH | 0.05 | 97.55 | 20 |
| Example 1-14 | Dispersion composition 14 | TUBALL | 1.0 | W#9300 | 0.5 | 50 | 100 | - | - | NaOH | 0.04 | 98.46 | 15 |
| Example 1-15 | Dispersion composition 15 | TUBALL | 1.0 | W#9300 | 2.5 | 250 | 100 | - | - | NaOH | 0.04 | 96.46 | 15 |
| Example 1-16 | Dispersion composition 16 | TNSR | 1.0 | W#9300 | 1.0 | 100 | 100 | - | - | NaOH | 0.04 | 97.96 | 15 |

(continued)

| Example and Comparative Example | Dispersion composition | CNT | | Polymer Components | | | | | | Basic Compounds | | Solvent NMP | Dispersion conditions |
|---|---|---|---|---|---|---|---|---|---|---|---|---|---|
| | | | | Polyvinylidene fluoride resin | | | | Other polymer components | | | | | |
| | | Type | Solid content addition amount (part) | Type | Solid content addition amount (part) | Solid content addition amount to 100 parts by mass of CNT (part) | Content rate based on mass of polymer component (%) | Type | Solid content addition amount (part) | Type | Solid content addition amount (part) | Addition amount (part) | Pass frequency (times) |
| Example 1-17 | Dispersion composition 17 | TNSAR | 1.0 | W#9300 | 1.0 | 100 | 100 | - | - | NaOH | 0.04 | 97.96 | 15 |
| Example 1-18 | Dispersion composition 18 | TUBALL | 1.0 | W#9300 | 1.0 | 100 | 100 | - | - | LiOH | 0.04 | 97.96 | 15 |
| Example 1-19 | Dispersion composition 19 | TUBALL | 1.0 | W#9300 | 1.0 | 100 | 100 | - | - | KOH | 0.04 | 97.96 | 15 |
| Example 1-20 | Dispersion composition 20 | TUBALL | 1.0 | W#9300 | 1.0 | 100 | 100 | - | - | $Na_2CO_3$ | 0.08 | 97.92 | 15 |
| Example 1-21 | Dispersion composition 21 | TUBALL | 1.0 | W#9300 | 1.0 | 100 | 100 | - | - | $C_2H_5NH_2$ | 0.20 | 97.80 | 15 |
| Example 1-22 | Dispersion composition 22 | TUBALL | 1.0 | W#9300 | 1.0 | 100 | 100 | - | - | NaOH | 0.04 | 97.96 | 15 |
| Example 1-23 | Dispersion composition 23 | TUBALL | 1.0 | W#9300 | 1.0 | 100 | 100 | - | - | NaOH | 0.04 | 97.96 | 20 |

(continued)

| Example and Comparative Example | Dispersion composition | CNT | | Polymer Components | | | | | | Basic Compounds | | Solvent NMP | Dispersion conditions |
| | | | | Polyvinylidene fluoride resin | | | | Other polymer components | | | | | |
| | | Type | Solid content addition amount (part) | Type | Solid content addition amount (part) | Solid content addition amount to 100 parts by mass of CNT (part) | Content rate based on mass of polymer component (%) | Type | Solid content addition amount (part) | Type | Solid content addition amount (part) | Addition amount (part) | Pass frequency (times) |
|---|---|---|---|---|---|---|---|---|---|---|---|---|---|
| Example 1-24 | Dispersion composition 24 | TURALL | 1.0 | W#9300 | 1.0 | 100 | 100 | - | - | NaOH | 0.04 | 97.96 | 10 |
| Example 1-25 | Dispersion composition 25 | TUBALL | 1.0 | W#9300 | 1.0 | 100 | 100 | - | - | NaOH | 0.04 | 97.96 | 5 |
| Example 1-26 | Dispersion composition 26 | 1UBAll. | 1.0 | W#9300 | 1.0 | 100 | 100 | - | - | NaOH | 0.02 | 97.98 | 15 |
| Example 1-27 | Dispersion composition 27 | TUBALL | 1.0 | W#9300 | 1.0 | 100 | 100 | - | - | NaOH | 0.03 | 97.97 | 15 |
| Example 1-28 | Dispersion composition 28 | TUBALL | 1.0 | W#9300 | 1.0 | 100 | 100 | - | - | NaOH | 0.08 | 97.92 | 15 |
| Example 1-29 | Dispersion composition 29 | TUBALL | 1.0 | W#9300 | 1.0 | 100 | 100 | - | - | NaOH | 0.10 | 97.90 | 15 |
| Example 1-30 | Dispersion composition 30 | TUBALL | 1.0 | W#9300 | 1.0 | 100 | 100 | - | - | NaOH | 0.15 | 97.85 | 15 |

(continued)

| Example and Comparative Example | Dispersion composition | CNT | | Polymer Components | | | | | | Basic Compounds | | Solvent NMP | Dispersion conditions |
| | | | | Polyvinylidene fluoride resin | | | | Other polymer components | | | | | |
| | | Type | Solid content addition amount (part) | Type | Solid content addition amount (part) | Solid content addition amount to 100 parts by mass of CNT (part) | Content rate based on mass of polymer component (%) | Type | Solid content addition amount (part) | Type | Solid content addition amount (part) | Addition amount (part) | Pass frequency (times) |
|---|---|---|---|---|---|---|---|---|---|---|---|---|---|
| Example 1-31 | Dispersion composition 31 | 1UBAll. | 1.0 | W#9300 | 1.0 | 100 | 99 | H-NBR1 | 0.01 | NaOH | 0.04 | 97.95 | 15 |
| Example 1-32 | Dispersion composition 32 | TURALL | 1.0 | W#9300 | 1.0 | 100 | 95 | H-NBR1 | 0.05 | NaOH | 0.04 | 97.91 | 15 |
| Example 1-33 | Dispersion composition 33 | TUBALL | 1.0 | W#9300 | 1.0 | 100 | 91 | H-NBR1 | 0.1 | NaOH | 0.04 | 97.86 | 15 |
| Example 1-34 | Dispersion composition 34 | TUBALL | 1.0 | W#9300 | 1.0 | 100 | 91 | H-NBR2 | 0.1 | NaOH | 0.04 | 97.86 | 15 |
| Example 1-35 | Dispersion composition 35 | TUBALL | 1.0 | W#9300 | 1.0 | 100 | 91 | H-NBR3 | 0.1 | NaOH | 0.04 | 97.86 | 15 |
| Example 1-36 | Dispersion composition 36 | TUBALL | 1.0 | W#9300 | 1.0 | 100 | 91 | PVP | 0.1 | NaOH | 0.04 | 97.86 | 15 |
| Example 1-37 | Dispersion composition 37 | 1UBAll. | 1.0 | W#9300 | 1.0 | 100 | 91 | PVA | 0.1 | NaOH | 0.04 | 97.86 | 15 |

(continued)

| Example and Comparative Example | Dispersion composition | CNT | | Polymer Components | | | | | | Basic Compounds | | Solvent NMP | Dispersion conditions |
| | | | | Polyvinylidene fluoride resin | | | | Other polymer components | | | | | |
| | | Type | Solid content addition amount (part) | Type | Solid content addition amount (part) | Solid content addition amount to 100 parts by mass of CNT (part) | Content rate based on mass of polymer component (%) | Type | Solid content addition amount (part) | Type | Solid content addition amount (part) | Addition amount (part) | Pass frequency (times) |
|---|---|---|---|---|---|---|---|---|---|---|---|---|---|
| Comparative Example 1-1 | Comparative dispersion composition 1 | TUBALL | 1.0 | W#9300 | 1.0 | 100 | 100 | - | - | - | - | 98.00 | 15 |
| Comparative Example 1-2 | Comparative dispersion composition 2 | TUBALL | 1.0 | W#9300 | 1.0 | 100 | 100 | - | - | NaOH | 0.04 | 97.96 | 30 |
| Comparative Example 1-3 | Comparative dispersion composition 3 | TUBALL | 1.0 | W#9300 | 1.0 | 100 | 100 | - | - | NaOH | 0.04 | 97.96 | 3 |
| Comparative Example 1-4 | Comparative dispersion composition 4 | TUBALL | 1.0 | W#9300 | 1.0 | 100 | 77 | H-NBR1 | 0.3 | NaOH | 0.04 | 97.66 | 15 |
| Comparative Example 1-5 | Comparative dispersion composition 5 | TUBALL | 1.0 | s-5130 | 3.0 | 300 | 86 | H-NBR1 | 0.5 | NaOH | 0.005 | 95.495 | 15 |

<Measurement and Evaluation of Physical Properties of Dispersion Composition>

(Particle Size Measurement Method for $D_{90}$ of Dispersion Composition)

$D_{90}$ was measured using a particle size distribution measuring device (Partica LA-960V2, manufactured by HORIBA). The operating conditions for circulation/ultrasonic were: circulation speed: 3, ultrasonic intensity: 7, ultrasonic time: 1 minute, stirring speed: 1, stirring mode: continuous. In addition, during air removal, ultrasonic operation was performed at ultrasonic intensity 7 and ultrasonic time 5 seconds. The refractive index of water was set to 1.333, and the refractive index of carbon material was set to 1.92. For measurement, the measurement sample was diluted such that the transmittance of the red laser diode was 70-90%, and ultrasonic operation was performed under the conditions of ultrasonic intensity: 7, ultrasonic time: 1 minute, and the particle diameter criterion was volume. The values in Table 1 indicate that the particle diameter $D_{90}$ is within the following range.

1: Less than 2.0 $\mu$m
2: Equal to 2.0 $\mu$m or more and less than 2.3 $\mu$m
3: Equal to 2.3 $\mu$m or more and less than 2.5 $\mu$m
4: Equal to 2.5 $\mu$m or more and less than 10.0 $\mu$m
5: Equal to 10.0 $\mu$m or more and less than 15.0 $\mu$m
6: Equal to 15.0 $\mu$m or more and less than 20.0 $\mu$m
7: Equal to 20.0 $\mu$m or more

(pH Measurement Method of Dispersion Composition)

The pH measurement sample was adjusted by adding water dropwise while stirring the dispersion composition with a disper such that when the mass of non-volatile matter in the dispersion composition was 100 parts, the non-volatile matter in the pH measurement sample was 40 parts. For measurement, a desktop pH meter (Seven Compact S200 Expert Pro, manufactured by METTLER TOLEDO) was used, and the measurement was performed at a temperature of 25°C. The values in Table 1 indicate that the pH is in the following range.

1: Less than 7.5
2: Equal to 7.5 or more and less than 7.7
3: Equal to 7.7 or more and less than 8.0
4: Equal to 8.0 or more and less than 11.0
5: Equal to 11.0 or more and less than 12.0
6: Equal to 12.0 or more and less than 13.0
7: Equal to 13.0 or more

(Viscosity Measurement Method of Dispersion Composition)

The viscosity of the dispersion composition was measured using a B-type viscometer ("BL", manufactured by TOKI SANGYO) at a temperature of 25°C, immediately after thoroughly stirring with a spatula, at a rotor rotation speed of 12 rpm with the B-type viscometer. The viscosity measured at 12 rpm was defined as the initial viscosity. From the viewpoint of fluidity, the lower the initial viscosity, the better, and if the evaluation criteria are A to C, handling may be performed satisfactorily.

Initial Viscosity          Evaluation Criteria
A: Less than 6,000 mPa·s
B: Equal to 6,000 mPa·s or more and less than 8,000 mPa·s
C: Equal to 8,000 mPa·s or more and less than 11,000 mPa·s
D: Equal to 11,000 mPa·s or more

(Evaluation Method for Storage Stability of Dispersion Composition)

The evaluation of storage stability was determined by the presence or absence of phase separation after storing the dispersion composition after standing at 40°C. The determination method is as follows. 1.5g to 2.0g of the supernatant of the dispersion composition was placed in an aluminum dish with a diameter of 7.5cm and a height of 1cm, and dried in an electric oven at 120°C+5°C for 1 hour. Subsequently, the weight of the solid content was measured, and in the case where it decreased by 0.10% or more from the theoretical solid content, it was determined that phase separation had occurred.

Storage Stability          Evaluation Criteria
A: No phase separation occurred even after 1 month.
B: Phase separation occurred after 1 week.
C: Phase separation occurred after 3 days.
D: Phase separation occurred after 1 day.

[Table 2]

Table 2

| Example and Comparative Example | Dispersion Composition | $D_{90}$ | pH | Initial viscosity | Storage stability |
|---|---|---|---|---|---|
| Example 1-1 | Dispersion composition 1 | 4 | 4 | B | A |
| Example 1-2 | Dispersion composition 2 | 4 | 4 | B | A |
| Example 1-3 | Dispersion composition 3 | 4 | 4 | B | A |
| Example 1-4 | Dispersion composition 4 | 4 | 4 | B | A |
| Example 1-5 | Dispersion composition 5 | 4 | 4 | A | A |
| Example 1-6 | Dispersion composition 6 | 4 | 4 | A | A |
| Example 1-7 | Dispersion composition 7 | 4 | 4 | A | A |
| Example 1-8 | Dispersion composition 8 | 4 | 4 | B | A |
| Example 1-9 | Dispersion composition 9 | 4 | 4 | B | A |
| Example 1-10 | Dispersion composition 10 | 4 | 4 | A | A |
| Example 1-11 | Dispersion composition 11 | 4 | 4 | A | A |
| Example 1-12 | Dispersion composition 12 | 4 | 4 | A | A |
| Example 1-13 | Dispersion composition 13 | 4 | 4 | A | A |
| Example 1-14 | Dispersion composition 14 | 4 | 4 | B | B |
| Example 1-15 | Dispersion composition 15 | 4 | 4 | C | A |
| Example 1-16 | Dispersion composition 16 | 4 | 4 | A | A |
| Example 1-17 | Dispersion composition 17 | 4 | 4 | A | A |
| Example 1-18 | Dispersion composition 18 | 4 | 4 | A | A |
| Example 1-19 | Dispersion composition 19 | 4 | 4 | A | A |
| Example 1-20 | Dispersion composition 20 | 4 | 4 | B | A |
| Example 1-21 | Dispersion composition 21 | 4 | 4 | C | B |
| Example 1-22 | Dispersion composition 22 | 2 | 4 | A | A |
| Example 1-23 | Dispersion composition 23 | 3 | 4 | A | A |
| Example 1-24 | Dispersion composition 24 | 5 | 4 | A | A |
| Example 1-25 | Dispersion composition 25 | 6 | 4 | A | A |
| Example 1-26 | Dispersion composition 26 | 4 | 2 | B | C |
| Example 1-27 | Dispersion composition 27 | 4 | 3 | B | B |
| Example 1-28 | Dispersion composition 28 | 4 | 5 | B | B |
| Example 1-29 | Dispersion composition 29 | 4 | 6 | B | C |

(continued)

| Example and Comparative Example | Dispersion Composition | $D_{90}$ | pH | Initial viscosity | Storage stability |
|---|---|---|---|---|---|
| Example 1-30 | Dispersion composition 30 | 4 | 7 | C | C |
| Example 1-31 | Dispersion composition 31 | 4 | 4 | A | A |
| Example 1-32 | Dispersion composition 32 | 4 | 4 | A | A |
| Example 1-33 | Dispersion composition 33 | 4 | 4 | A | A |
| Example 1-34 | Dispersion composition 34 | 4 | 4 | A | A |
| Example 1-35 | Dispersion composition 35 | 4 | 4 | A | A |
| Example 1-36 | Dispersion composition 36 | 4 | 4 | A | A |
| Example 1-37 | Dispersion composition 37 | 4 | 4 | A | A |
| Comparative Example 1-1 | Comparative dispersion composition 1 | 4 | 1 | C | D |
| Comparative Example 1-2 | Comparative dispersion composition 2 | 1 | 4 | A | A |
| Comparative Example 1-3 | Comparative dispersion composition 3 | 7 | 4 | B | A |
| Comparative Example 1-4 | Comparative dispersion composition 4 | 1 | 4 | A | A |
| Comparative Example 1-5 | Comparative dispersion composition 5 | 1 | 1 | A | A |

<Preparation of Positive Electrode Composite Material Slurry and Positive Electrode>

According to the combinations and composition ratios shown in Table 3, positive electrode composite material slurry and positive electrode were prepared as follows. A dispersion composition, positive electrode active material, and NMP were added to a plastic container with a capacity of 150 cm$^3$, and stirred for 150 seconds at 2,000 rpm using a rotation-revolution mixer (Awatori Rentaro, ARE-310, manufactured by Thinky) to obtain a positive electrode composite material slurry. The non-volatile matter of the positive electrode composite material slurry was set to 78 mass%.

The positive electrode composite material slurry was applied onto a 20 μm thick aluminum foil using an applicator, then dried in an electric oven at 120°C ± 5°C for 25 minutes to prepare an electrode film. Subsequently, the electrode film was subjected to rolling processing using a roll press (3t hydraulic roll press, manufactured by THANK-METAL) to obtain a positive electrode (positive electrodes 1-32, comparative positive electrodes 1-3). Moreover, the electrode composite material layer had a weight per unit area of 20 mg/cm$^2$, and the density of the electrode composite material layer after rolling processing was 3.2 g/cc.

In the Examples and Comparative Examples, the following positive electrode active materials were used.

• NMC1: S800 ($LiNi_{0.8}Mn_{0.1}Co_{0.1}O_2$, manufactured by Jinhe)

<Evaluation of Positive Electrode>

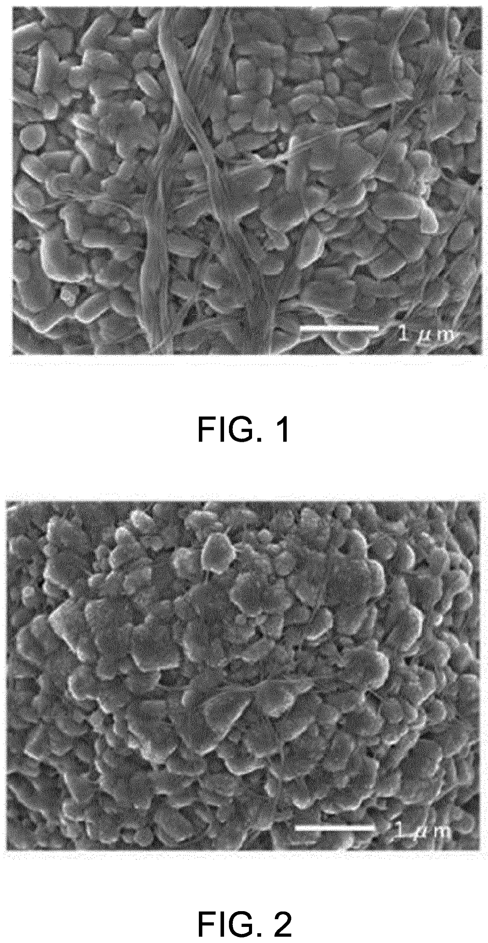

FIG. 1 and FIG. 2 show photographs (30,000x magnification) observed by scanning electron microscope of the obtained positive electrodes. FIG. 1 is Example 2-10 (positive electrode 10), and FIG. 2 is a photograph (30,000x magnification) of Comparative Example 2-6 (comparative positive electrode 6).

From this, it was confirmed that in FIG. 2, carbon nanotubes are defibrated individually and in contact with the positive electrode active material, while in FIG. 1, they are maintained as bundle structures. Since the fiber length of the bundle structure is considered to be longer than that of a single carbon nanotube, it is presumed that the contact resistance between carbon nanotubes is reduced.

(Evaluation Method for Conductivity of Positive Electrode)

This was carried out in the same manner as paragraph 0172 of Patent No. 7107413.

Conductivity        Evaluation Criteria
A: Less than 5Ω·cm
B: Equal to 5Ω·cm or more and less than 10Ω·cm

(continued)

Conductivity        Evaluation Criteria

C: Equal to 10Ω·cm or more and less than 20Ω·cm

D: Equal to 20Ω·cm or more

(Evaluation Method for Adhesion of Positive Electrode)

This was carried out in the same manner as paragraph 0173 of Japanese Patent No. 7107413.

Adhesion        Evaluation Criteria

A: Equal to 1.0N/cm or more

B: Equal to 0.8N/cm or more and less than 1.0 N/cm

C: Equal to 0.5N/cm or more and less than 0.8N/cm

D: Less than 0.5N/cm

[Table 3]

Table 3

| Example and Comparative Example | Positive electrode | Dispersion Composition | Positive electrode active material Type | Positive electrode active material Solid content ratio (%) | CNT Solid content ratio (%) | Polymer Components Polyvinylidene fluoride resin Solid content ratio (%) | Polymer Components Other polymer components Solid content ratio (%) | Basic compound Solid content ratio (%) | Conductivity | Adhesion |
|---|---|---|---|---|---|---|---|---|---|---|
| Example 2-1 | Positive electrode 1 | Dispersion composition 1 | NMC1 | 98.98 | 0.5 | 0.5 | - | 0.02 | A | A |
| Example 2-2 | Positive electrode 2 | Dispersion composition 2 | NMC1 | 98.98 | 0.5 | 0.5 | - | 0.02 | A | A |
| Example 2-3 | Positive electrode 3 | Dispersion composition 3 | NMC1 | 98.98 | 0.5 | 0.5 | - | 0.02 | A | A |
| Example 2-4 | Positive electrode 4 | Dispersion Composition 4 | NMC1 | 98.98 | 0.5 | 0.5 | - | 0.02 | A | A |
| Example 2-5 | Positive electrode 5 | Dispersion composition 5 | NMC1 | 98.98 | 0.5 | 0.5 | - | 0.02 | A | A |
| Example 2-6 | Positive electrode 6 | Dispersion Composition 6 | NMC1 | 98.98 | 0.5 | 0.5 | - | 0.02 | A | A |
| Example 2-7 | Positive electrode 7 | Dispersion composition 7 | NMC1 | 98.98 | 0.5 | 0.5 | - | 0.02 | A | A |
| Example 2-8 | Positive electrode 8 | Dispersion Composition 8 | NMC1 | 98.98 | 0.5 | 0.5 | - | 0.02 | A | A |
| Example 2-9 | Positive electrode 9 | Dispersion composition 9 | NMC1 | 98.98 | 0.5 | 0.5 | - | 0.02 | A | A |
| Example 2-10 | Positive electrode 10 | Dispersion Composition 10 | NMC1 | 98.98 | 0.5 | 0.5 | - | 0.02 | A | A |
| Example 2-11 | Positive electrode 11 | Dispersion composition 11 | NMC1 | 98.98 | 0.5 | 0.5 | - | 0.02 | A | A |

(continued)

| Example and Comparative Example | Positive electrode | Dispersion Composition | Positive electrode active material | | CNT | Polymer Components | | Basic compound | Conductivity | Adhesion |
| | | | | | | Polyvinylidene fluoride resin | Other polymer components | | | |
| | | | Type | Solid content ratio (%) | Solid content ratio (%) | Solid content ratio (%) | Solid content ratio (%) | Solid content ratio (%) | | |
|---|---|---|---|---|---|---|---|---|---|---|
| Example 2-12 | Positive electrode 12 | Dispersion Composition 12 | NMC1 | 98.98 | 0.5 | 0.5 | - | 0.02 | A | A |
| Example 2-13 | Positive electrode 13 | Dispersion composition 13 | NMC1 | 98.98 | 0.5 | 0.5 | - | 0.02 | A | A |
| Example 2-14 | Positive electrode 14 | Dispersion Composition 14 | NMC1 | 98.98 | 0.5 | 0.3 | - | 0.02 | A | A |
| Example 2-15 | Positive electrode 15 | Dispersion composition 15 | NMC1 | 98.98 | 0.5 | 1.3 | - | 0.02 | A | A |
| Example 2-16 | Positive electrode 16 | Dispersion Composition 16 | NMC1 | 98.98 | 0.5 | 0.5 | - | 0.02 | A | A |
| Example 2-17 | Positive electrode 17 | Dispersion composition 17 | NMC1 | 98.98 | 0.5 | 0.5 | - | 0.02 | A | A |
| Example 2-18 | Positive electrode 18 | Dispersion Composition 18 | NMC1 | 98.98 | 0.5 | 0.5 | - | 0.02 | A | A |
| Example 2-19 | Positive electrode 19 | Dispersion Composition 19 | NMC1 | 98.98 | 0.5 | 0.5 | - | 0.02 | A | A |
| Example 2-20 | Positive electrode 20 | Dispersion Composition 20 | NMC1 | 98.96 | 0.5 | 0.5 | - | 0.04 | A | A |
| Example 2-21 | Positive electrode 21 | Dispersion composition 21 | NMC1 | 98.90 | 0.5 | 0.5 | - | 0.10 | A | A |
| Example 2-22 | Positive electrode 22 | Dispersion Composition 22 | NMC1 | 98.98 | 0.5 | 0.5 | - | 0.02 | B | A |
| Example 2-23 | Positive electrode 23 | Dispersion composition 23 | NMC1 | 98.98 | 0.5 | 0.5 | - | 0.02 | A | A |

(continued)

| Example and Comparative Example | Positive electrode | Dispersion Composition | Positive electrode active material | | CNT | Polymer Components | | Basic compound | Conductivity | Adhesion |
|---|---|---|---|---|---|---|---|---|---|---|
| | | | Type | Solid content ratio (%) | Solid content ratio (%) | Polyvinylidene fluoride resin — Solid content ratio (%) | Other polymer components — Solid content ratio (%) | Solid content ratio (%) | | |
| Example 2-24 | Positive electrode 24 | Dispersion Composition 24 | NMC1 | 98.98 | 0.5 | 0.5 | - | 0.02 | B | A |
| Example 2-25 | Positive electrode 25 | Dispersion composition 25 | NMC1 | 98.98 | 0.5 | 0.5 | - | 0.02 | B | B |
| Example 2-26 | Positive electrode 26 | Dispersion Composition 26 | NMC1 | 98.93 | 0.5 | 0.5 | - | 0.01 | A | A |
| Example 2-27 | Positive electrode 27 | Dispersion composition 27 | NMC1 | 98.93 | 0.5 | 0.5 | - | 0.02 | A | A |
| Example 2-28 | Positive electrode 28 | Dispersion composition 28 | NMC1 | 98.93 | 0.5 | 0.5 | - | 0.04 | A | A |
| Example 2-29 | Positive electrode 29 | Dispersion Composition 29 | NMC1 | 98.93 | 0.5 | 0.5 | - | 0.05 | A | A |
| Example 2-30 | Positive electrode 30 | Dispersion composition 30 | NMC1 | 98.93 | 0.5 | 0.5 | - | 0.08 | A | A |
| Example 2-31 | Positive electrode 31 | Dispersion composition 31 | NMC1 | 98.98 | 0.5 | 0.5 | 0.01 | 0.02 | A | A |
| Example 2-32 | Positive electrode 32 | Dispersion composition 32 | NMC1 | 98.96 | 0.5 | 0.5 | 0.03 | 0.02 | A | A |
| Example 2-33 | Positive electrode 33 | Dispersion composition 33 | NMC1 | 98.93 | 0.5 | 0.5 | 0.05 | 0.02 | B | A |
| Example 2-34 | Positive electrode 34 | Dispersion composition 34 | NMC1 | 98.93 | 0.5 | 0.5 | 0.05 | 0.02 | B | A |
| Example 2-35 | Positive electrode 35 | Dispersion composition 35 | NMC1 | 98.93 | 0.5 | 0.5 | 0.05 | 0.02 | B | A |

| Example and Comparative Example | Positive electrode | Dispersion Composition | Positive electrode active material | | CNT | Polymer Components | | Basic compound | Conductivity | Adhesion |
|---|---|---|---|---|---|---|---|---|---|---|
| | | | | | | Polyvinylidene fluoride resin | Other polymer components | | | |
| | | | Type | Solid content ratio (%) | Solid content ratio (%) | Solid content ratio (%) | Solid content ratio (%) | Solid content ratio (%) | | |
| Example 2-36 | Positive electrode 36 | Dispersion composition 36 | NMC1 | 98.93 | 0.5 | 0.5 | 0.05 | 0.02 | B | A |
| Example 2-37 | Positive electrode 37 | Dispersion composition 37 | NMC1 | 98.93 | 0.5 | 0.5 | 0.05 | 0.02 | B | A |
| Comparative Example 2-1 | Comparative positive electrode 1 | Comparative Dispersion Composition 1 | NMC1 | 99.00 | 0.5 | 0.5 | - | 0.00 | A | A |
| Comparative Example 2-2 | Comparative positive electrode 2 | Comparative Dispersion Composition 2 | NMC1 | 98.98 | 0.5 | 0.5 | - | 0.02 | B | B |
| Comparative Example 2-3 | Comparative positive electrode 3 | Comparative Dispersion Composition 3 | NMC1 | 98.98 | 0.5 | 0.5 | - | 0.02 | C | B |
| Comparative Example 2-4 | Comparative positive electrode 4 | Comparative Dispersion Composition 4 | NMC1 | 98.78 | 0.5 | 0.5 | 0.15 | 0.02 | B | B |
| Comparative Example 2-5 | Comparative positive electrode 5 | Comparative Dispersion Composition 5 | NMC1 | 97.75 | 0.5 | 1.5 | 0.25 | 0.0025 | B | B |

EP 4 679 537 A1

<Preparation and Evaluation of Non-aqueous Electrolyte Secondary Battery>

(Preparation of Standard Negative Electrode)

After adding 0.5 mass% of acetylene black (DENKA BLACK (registered trademark) HS-100, manufactured by DENKA), 1 mass% of MAC500LC (sodium carboxymethyl cellulose salt Sunrose special type MAC500L, manufactured by Nippon Paper Industries, non-volatile matter 100%), and 98.4 mass% of water to a plastic container with a capacity of 150 ml, the mixture was stirred for 30 seconds at 2,000 rpm using a rotation-revolution mixer (Awatori Rentaro, ARE-310, manufactured by Thinky). Furthermore, 97 mass% of artificial graphite (CGB-20, manufactured by Nippon Graphite Industries) was added as an active material, and the mixture was stirred for 150 seconds at 2,000 rpm using a rotation-revolution mixer (Awatori Rentaro, ARE-310, manufactured by Thinky). Subsequently, 3.1 mass% of SBR (styrene butadiene rubber, TRD2001, non-volatile matter 48%, manufactured by JSR) was added, and the mixture was stirred for 30 seconds at 2,000 rpm using a rotation-revolution mixer (Awatori Rentaro, ARE-310, manufactured by Thinky) to obtain a standard negative electrode composite material slurry. The non-volatile matter of the standard negative electrode composite material slurry was 50 mass%.

The standard negative electrode composite material slurry described above was coated on a 20 $\mu$m thick copper foil as a current collector using an applicator, and then dried in an electric oven at 80°C±5°C for 25 minutes to adjust the weight per unit area of the electrode to 10 mg/cm². Furthermore, rolling processing was performed using a roll press (3t hydraulic roll press, manufactured by THANK-METAL) to prepare a standard negative electrode with an electrode composite material layer density of 1.6 g/cm³.

(Preparation of Non-aqueous Electrolyte Secondary Battery)

The positive electrode described in Table 4 and the standard negative electrode were punched out to 50 mm × 45 mm and 45 mm × 40 mm, respectively, and the punched positive electrode and standard negative electrode, with a separator (porous polypropylene film) inserted therebetween, were placed in an aluminum laminate bag and dried in an electric oven at 70°C for 1 hour. Subsequently, in a glove box filled with argon gas, 2 mL of electrolyte solution (a mixed solvent was prepared by mixing ethylene carbonate, dimethyl carbonate, and diethyl carbonate in a volume ratio of 1:1:1, and vinylene carbonate was further added as an additive at 1 mass% relative to 100 mass%, and LiPF$_6$ was dissolved at a concentration of 1 M to prepare a non-aqueous electrolyte solution) was injected, and then the aluminum laminate was sealed to manufacture each non-aqueous electrolyte secondary battery.

(Evaluation Method for Rate Characteristics of Non-aqueous Electrolyte Secondary Battery)

This was carried out in the same manner as in paragraph 0178 of Patent No. 7107413.

Rate Characteristics    Evaluation Criteria
A: 90% or more
B: 85% or more and less than 90%
C: 80% or more and less than 85%
D: Less than 80%

(Evaluation Method for Cycle Characteristics of Non-aqueous Electrolyte Secondary Battery)

The obtained secondary battery was placed in a constant temperature room at 25°C, and charge-discharge measurements were performed using a charge-discharge device (SM-8, manufactured by HOKUTO DENKO). After performing constant current constant voltage charging (cut-off current 2.5mA (0.05C)) at a charge current of 25mA (0.5C) with a charge termination voltage of 4.3V, constant current discharge was performed at a discharge current of 25mA (0.5C) with a discharge termination voltage of 3V. This operation was repeated 200 times. The cycle characteristics may be expressed by the ratio of the 0.5C discharge capacity at the 3rd cycle to the 0.5C discharge capacity at the 200th cycle at 25°C, as shown in the following formula 2.

Cycle characteristics = 0.5C discharge capacity at the 200th cycle/0.5C discharge capacity at the 3rd cycle × 100(%)    (Formula 2)

Cycle Characteristics      Evaluation Criteria
A: 90% or more
B: 80% or more and less than 90%
C: 70% or more and less than 80%
D: Less than 70%

[Table 4]

Table 4

| Example and Comparative Example | Battery | Positive electrode | Rate Characteristics | Cycle Characteristics |
|---|---|---|---|---|
| Example 3-1 | Battery 1 | Positive electrode 1 | A | A |
| Example 3-2 | Battery 2 | Positive electrode 2 | A | A |
| Example 3-3 | Battery 3 | Positive electrode 3 | A | A |
| Example 3-4 | Battery 4 | Positive electrode 4 | A | A |
| Example 3-5 | Battery 5 | Positive electrode 5 | A | A |
| Example 3-6 | Battery 6 | Positive electrode 6 | A | A |
| Example 3-7 | Battery 7 | Positive electrode 7 | A | A |
| Example 3-8 | Battery 8 | Positive electrode 8 | A | A |
| Example 3-9 | Battery 9 | Positive electrode 9 | A | A |
| Example 3-10 | Battery 10 | Positive electrode 10 | A | A |
| Example 3-11 | Battery 11 | Positive electrode 11 | A | A |
| Example 3-12 | Battery 12 | Positive electrode 12 | A | A |
| Example 3-13 | Battery 13 | Positive electrode 13 | A | A |
| Example 3-14 | Battery 14 | Positive electrode 14 | A | A |
| Example 3-15 | Battery 15 | Positive electrode 15 | A | A |
| Example 3-16 | Battery 16 | Positive electrode 16 | A | A |
| Example 3-17 | Battery 17 | Positive electrode 17 | A | A |
| Example 3-18 | Battery 18 | Positive electrode 18 | A | A |
| Example 3-19 | Battery 19 | Positive electrode 19 | A | A |
| Example 3-20 | Battery 20 | Positive electrode 20 | A | A |
| Example 3-21 | Battery 21 | Positive electrode 21 | A | A |
| Example 3-22 | Battery 22 | Positive electrode 22 | B | B |
| Example 3-23 | Battery 23 | Positive electrode 23 | A | B |
| Example 3-24 | Battery 24 | Positive electrode 24 | B | B |
| Example 3-25 | Battery 25 | Positive electrode 25 | B | B |
| Example 3-26 | Battery 26 | Positive electrode 26 | A | A |
| Example 3-27 | Battery 27 | Positive electrode 27 | A | A |
| Example 3-28 | Battery 28 | Positive electrode 28 | A | A |
| Example 3-29 | Battery 29 | Positive electrode 29 | A | A |
| Example 3-30 | Battery 30 | Positive electrode 30 | A | A |
| Example 3-31 | Battery 31 | Positive electrode 31 | A | B |

(continued)

| Example and Comparative Example | Battery | Positive electrode | Rate Characteristics | Cycle Characteristics |
|---|---|---|---|---|
| Example 3-32 | Battery 32 | Positive electrode 32 | B | B |
| Example 3-33 | Battery 33 | Positive electrode 33 | B | B |
| Example 3-34 | Battery 34 | Positive electrode 34 | B | B |
| Example 3-35 | Battery 35 | Positive electrode 35 | B | B |
| Example 3-36 | Battery 36 | Positive electrode 36 | B | B |
| Example 3-37 | Battery 37 | Positive electrode 37 | B | B |
| Comparative Example 3-1 | Comparison battery 1 | Comparative positive electrode 1 | B | B |
| Comparative Example 3-2 | Comparison battery 2 | Comparative positive electrode 2 | C | B |
| Comparative Example 3-3 | Comparison battery 3 | Comparative positive electrode 3 | C | D |
| Comparative Example 3-4 | Comparison battery 4 | Comparative positive electrode 4 | C | B |
| Comparative Example 3-5 | Comparison battery 5 | Comparative positive electrode 5 | C | B |

As shown in the table, the carbon nanotube dispersion composition of the present embodiment has high conductivity, good fluidity and storage stability, and it was confirmed that a non-aqueous electrolyte secondary battery having excellent rate characteristics and cycle characteristics may be obtained by using the electrode composite material slurry and the electrode film made with this carbon nanotube dispersion composition. In contrast, in the Comparative Examples, there were problems with either initial viscosity, storage stability, conductivity, adhesion, rate characteristics, or cycle characteristics, and it was not possible to achieve both storage stability of the dispersion composition and rate characteristics and cycle characteristics when made into a non-aqueous electrolyte secondary battery.

## Claims

1. A carbon nanotube dispersion composition, comprising carbon nanotubes having an average outer diameter of 3 nm or less, a polymer component, and a solvent,

   wherein the polymer component contains a polyvinylidene fluoride resin capable of having a substituent as a main component, and
   the carbon nanotube dispersion composition has a particle diameter $D_{90}$ at a 90% volume accumulation of a particle size distribution measured by a laser diffraction method of 2.0 $\mu$m or more and less than 20.0 $\mu$m, and a pH of 7.5 or higher.

2. The carbon nanotube dispersion composition according to claim 1, wherein a content of the polyvinylidene fluoride resin capable of having a substituent is 30 parts by mass or more and 270 parts by mass or less with respect to 100 parts by mass of the carbon nanotubes having an average outer diameter of 3 nm or less.

3. The carbon nanotube dispersion composition according to claim 1, wherein a total content rate of the carbon nanotubes having an average outer diameter of 3 nm or less and the polymer component is 80 mass% or more based on a total mass of non-volatile components of the carbon nanotube dispersion composition.

4. The carbon nanotube dispersion composition according to claim 1, further comprising:

   a basic compound,
   wherein a content rate of the basic compound is 0.01 mass% or more and 0.2 mass% or less based on a mass of the carbon nanotube dispersion composition.

5. The carbon nanotube dispersion composition according to claim 1, wherein a content rate of the polyvinylidene fluoride resin capable of having a substituent is 87 mass% or more based on a mass of the polymer component.

6. A composite material slurry, comprising the carbon nanotube dispersion composition according to any one of claims 1 to 5, and an active material.

7. An electrode film, formed from the composite material slurry according to claim 6.

8. A non-aqueous electrolyte secondary battery, comprising:

a positive electrode and a negative electrode,
wherein at least one of the positive electrode and the negative electrode contains the electrode film according to claim 7.

FIG. 1

FIG. 2

## INTERNATIONAL SEARCH REPORT

International application No.

**PCT/JP2024/000580**

| A. | CLASSIFICATION OF SUBJECT MATTER |
|---|---|

*H01M 4/62*(2006.01)i; *C01B 32/159*(2017.01)i; *H01B 1/24*(2006.01)i; *H01G 11/36*(2013.01)i; *H01M 4/139*(2010.01)i
FI: H01M4/62 Z; C01B32/159; H01B1/24 A; H01G11/36; H01M4/139

According to International Patent Classification (IPC) or to both national classification and IPC

| B. | FIELDS SEARCHED |
|---|---|

Minimum documentation searched (classification system followed by classification symbols)

H01M4/62; C01B32/159; H01B1/24; H01G11/36; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 6962428 B1 (TOYO INK SC HOLDINGS CO., LTD.) 05 November 2021 (2021-11-05) | 1-8 |
| A | JP 6749703 B1 (LG CHEM, LTD.) 14 August 2020 (2020-08-14) | 1-8 |
| A | JP 2018-534220 A (LG CHEM, LTD.) 22 November 2018 (2018-11-22) | 1-8 |
| A | CN 103606650 A (DONGGUAN KANYO BATTERY TECHNOLOGY CO., LTD.) 26 February 2014 (2014-02-26) | 1-8 |
| A | CN 103915606 A (JIANGSU TIANZE NANO SCIENCE AND TECHNOLOGY CO., LTD.) 09 July 2014 (2014-07-09) | 1-8 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 February 2024** | **20 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/000580**

| Patent document cited in search report | | | Publication date (day/month/year) | Patent family member(s) | | | Publication date (day/month/year) |
|---|---|---|---|---|---|---|---|
| JP | 6962428 | B1 | 05 November 2021 | US | 2022/0173401 | A1 | |
| | | | | EP | 3988608 | A1 | |
| | | | | CN | 114342007 | A | |
| | | | | KR | 10-2022-0044731 | A | |
| JP | 6749703 | B1 | 14 August 2020 | US | 2018/0198129 | A1 | |
| | | | | WO | 2017/074124 | A1 | |
| | | | | EP | 3301745 | A1 | |
| | | | | KR | 10-2017-0049459 | A | |
| | | | | CN | 107851801 | A | |
| JP | 2018-534220 | A | 22 November 2018 | US | 2019/0051887 | A1 | |
| | | | | WO | 2017/052087 | A1 | |
| | | | | EP | 3355392 | A1 | |
| | | | | KR | 10-2017-0037510 | A | |
| | | | | CN | 108370037 | A | |
| CN | 103606650 | A | 26 February 2014 | (Family: none) | | | |
| CN | 103915606 | A | 09 July 2014 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7107413 B
- JP 7109632 B
- JP 2022063234 A
- JP 2021517352 A
- WO 7107413 A